# EUROPEAN PATENT SPECIFICATION

(11) **EP 2 867 608 B1**
(45) Date of publication and mention of the grant of the patent: **25.05.2016**
(21) Application number: 13740055.2
(22) Date of filing: 17.06.2013
(51) Int. Cl.: F41B 7/04, F41B 11/83

(54) **SPEARGUN WITH A SPEAR DRIVE SHAFT**
SPEERGEWEHR MIT EINER SPEERANTRIEBSWELLE
FUSIL-HARPON POURVU D'UN ARBRE D'ENTRAÎNEMENT DE HARPON

(30) Priority: 29.06.2012 GR 20120100339
(43) Date of publication of application: 06.05.2015
(73) Proprietor: Zournatzis, Andreas, 66131 Drama (GR)
(72) Inventor: Zournatzis, Andreas, 66131 Drama (GR)
(86) International application number: PCT/GR2013/000033
(87) International publication number: WO 2014/001825

(56) References cited:
- EP-A2- 2 022 328
- CA-A1- 2 640 377
- FR-A1- 2 172 020

## Description

The present invention relates to a new type of speargun which uses a spear drive and ejection shaft that constitutes a continuously-variable-transmission drive system. The ejection device of the speargun may be a piston powered by air pressure, a rubber element or a spring.

A speargun of the prior art is described in CA 2 640 377 A1.

Typical previous techniques include the air-powered, rubber-powered and spring spearguns. Air-powered spearguns consist of a grip having a trigger, a barrel containing pressurized air and a barrel of smaller diameter incorporating a piston that drives a spear. Rubber-powered spearguns consists of a mechanism of a grip, a trigger, a barrel, a head, and rubber elements, which drive a spear, and spring spearguns consist of a grip including a trigger, a barrel incorporating a spring by which the spear is driven.

Disadvantages of the air-powered spearguns are that the spear is positioned in the barrel of the speargun, and aiming is difficult since the user cannot see the spear to use it as aiming line. Also, when the spear is inserted in the barrel during loading of the speargun, water also penetrates between the inner side of the barrel and the spear, so that during release the piston also supplies energy to the water that has penetrated, and thus pistons larger than 13 mm in diameter are not used and air at high pressure is necessarily introduced in the spearguns. Furthermore, due to the arrangement of the components of the speargun, force is applied only by one hand and thus loading of the air-powered speargun is difficult.

The disadvantages of the rubber-powered spearguns is the low energy that the rubber elements provide to the spear in relation to their size, as well as that the rubber elements present increased hydrodynamic resistance during firing and shifting of the speargun in the water. Disadvantage of the spring spearguns is the limited energy they provide to the spear as a result of to their construction.

Purpose of the present invention is to provide an air-powered speargun wherein the spear is arranged on the barrel, the barrel containing the compressed air and the piston is closed, and no water penetrates during loading of the speargun, pistons larger than 13 mm in diameter can be used, resulting to its operation under low air pressure, a continuously-variable-transmission drive system is arranged in the head of the speargun, which is rotated by the piston and drives the spear, while loading of the speargun is effected by both hands.

According to the invention, this is achieved by a continuously-variable-transmission drive system, which consists of the shaft (10), the winding drums (8 - 8.1 - 9), the central part of the shaft (10) with the winding drum (9) being arranged in the head (7), while its ends and the winding drums (8 - 8.1) are arranged outside the head. The winding drums (8 - 8.1) drive, by means of the rope (4), the spear (5), while they are rotated by the shaft (10) and the winding drum (9), which is connected by means of the rope (11) to the piston (12), which moves due to the pressure in the air chamber (A) and the negative pressure in the air chamber (B) during release of the speargun.

An air-powered speargun according to the present invention presents many advantages. Since the spear is arranged on the barrel, the user may use it as an aiming line. During loading, no water enters in the barrel, which results in an increase in efficiency during release. The provision of a continuously-variable-transmission drive system results in an increased loading energy, as well as to a smooth provision of acceleration to the spear. The use of a piston having a diameter larger than 13 mm allows the operation of the speargun with low air pressure. Loading of the speargun is effected by both hands and higher amounts of energy are stored. The use of ropes for the ejection of the spear result in, due to their low hydrodynamic resistance, high efficiency.

The invention is described below by means of six embodiments and with reference to the accompanying figures, in which:
Figure 1 shows a side view of the speargun.
Figure 2 shows an upper view of the speargun.
Figure 3 shows in side view a cross-section of the barrels (3 - 15) and the head (7), where the piston (12) is connected to the rope (11) and this with the continuously-variable-transmission drive system which by means of the ropes (4) is connected to the spear (5) of the speargun.
Figure 4 shows in exploded view the majority of the components of the speargun.
Figure 5 shows a side upper view of the speargun, while figure 6 show the same with the protective caps (6) and (6.1) removed.
Figure 7 shows a cross-section of the head (7) and the barrels (3 - 15) illustrating the continuously-variable-transmission drive system.
Figure 8 shows the upper view of the figure 7.
Figures 9 and 10 show the upper and side views of the shaft (10) and the winding drums (8 - 8.1 - 9).
Figure 11 shows the piston (12) which has two gaskets and is connected to the rope (11) and this is connected to the continuously-variable-transmission drive system which is connected to the rope (4).
Figure 12 shows two cross-sections of the barrels (3 - 15) and the piston (12) having two gaskets (13) and connected to the rope (11).
Figure 13 shows the side of the barrels (3 - 15) which is arranged in the head (7), illustrating the holes (16) and how the barrels are connected on the upper and lower sides.
Figure 14 shows four cross-sections of the barrels (3 - 15) which are arranged in the head (7), illustrating the holes (16) and how the barrels are connected on the upper and lower sides.
Figure 15 shows the cross-section of the head (7) and of the barrels (3 - 15). The hole (16), the valve (19), the shaft (10) with the gasket (18) and the ball bearings (7) are illustrated.
Figures 16 and 17 show the rear and front sides of the gasket arranged on the shaft (10).
Figure 18 shows the side of the barrels (3 - 15) which is arranged in the grip (2), illustrating the plugs (20) and (14) that are inserted in their holes.
Figure 19 shows the side of the barrels (3 - 15) which is in the head (7), illustrating the plugs (20) and the head (7) that are inserted in their holes.
Figure 20 shows the cross-section of the head (7) and barrels (3 - 15) when the speargun is unloaded. The arrows show the pressure applied by the air while the piston forms the air chambers (A) and (B).

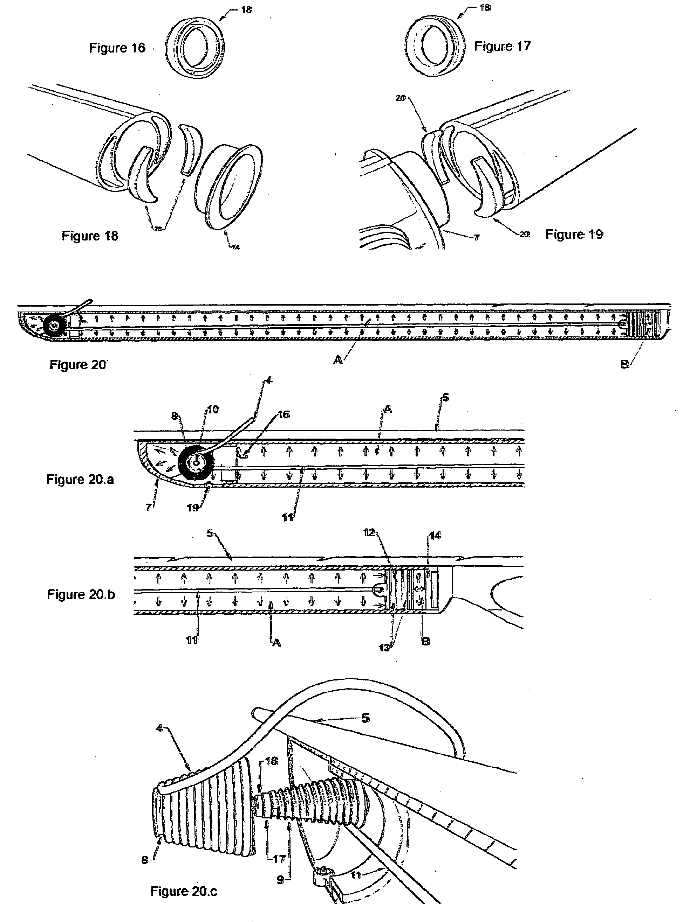

Figure 20.A and 20.B is a magnification of the figure 20. The hole (16), ropes (4) and (11), the shaft (10), the winding drum (8), the valve (19), the piston (12) with its gaskets (13), the plug (14), the spear (5) are illustrated.
Figure 20.C shows the interior of the head (7) when the speargun is unloaded. The winding drums (8), (8.1) with the rope (4) wound thereon, the gasket (18) and the ball bearing or slide ring (17), the winding drum (9) with the connecting rope (11) unwound, the spear (5) are illustrated.

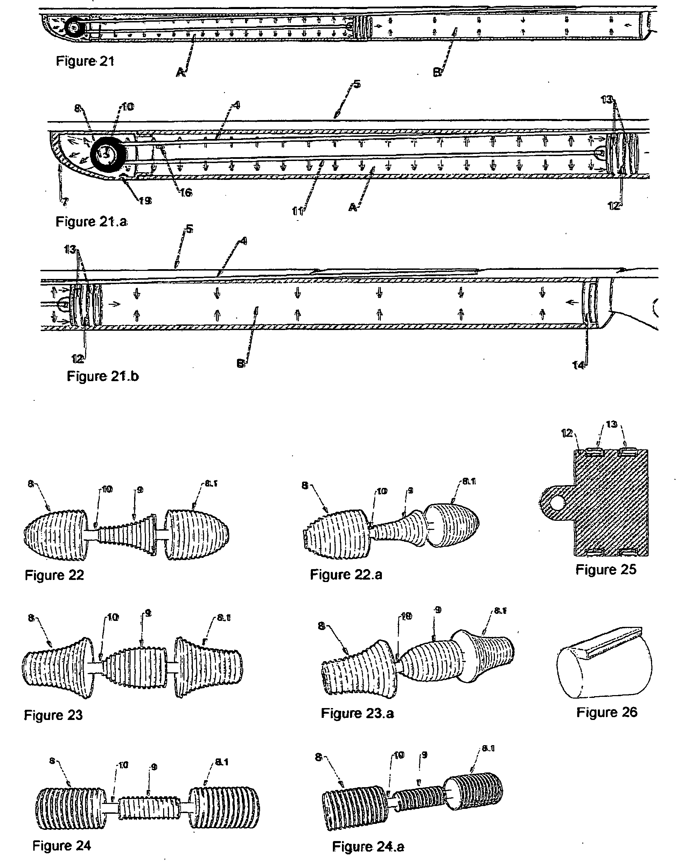

Figure 21 shows the cross-section of the head (7) and of the barrels (3 - 15), when the speargun is loaded. The arrows show the pressure applied by the air while the piston forms the air chambers (A) and (B).
Figure 21.A and 21.B is a magnification of the figure 21. The hole (16), the ropes (4) and (11), the shaft (10), the winding drum (8), the valve (19), the piston (12) with its gaskets (13), the plug (14), the spear (5) are illustrated.
Figures 22 and 22.a show the shaft (10) and the winding drums (8 - 8.1 - 9) where their slope generates a small variation in the speed ratio at the start of the ejection of the spear (5), while until the end of the ejection the variation in the speed ratio is increased logarithmically.
Figures 22 and 22.a show the shaft (10) and the winding drums (8 - 8.1 - 9) where their slope generates a large variation in the speed ratio at the start of the ejection of the spear (5), while until the end of the ejection the variation in the speed ratio is decreased logarithmically.
Figures 24 and 24.a show the shaft (10) and the winding drums (8 - 8.1 - 9) in which the speed ratio is invariable and their diameter is constant.
Figure 26 shows the protective cap of the winding drum (8), while the drum (8.1) has a respective cap for the right side.

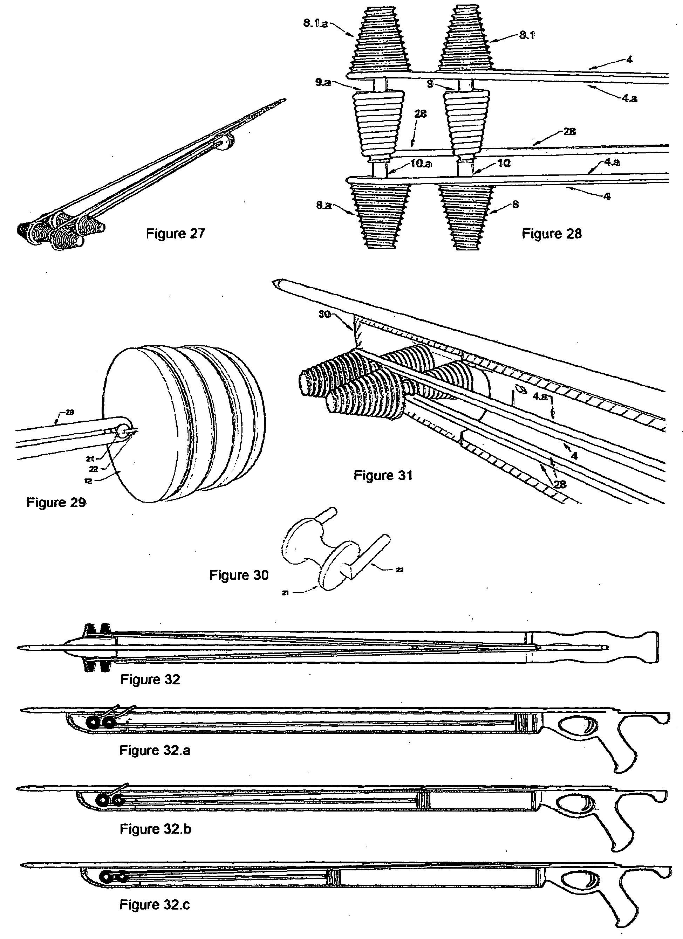

Figure 27 shows two continuously-variable-transmission drive systems of the speargun of the second embodiment which are connected to the piston.
Figure 28 shows the upper view of the two continuously-variable-transmission drive systems of the second embodiment. The winding drums (8 - 8.1 - 9) of the shaft (10), the winding drums (8.a - 8.1.a - 9.a) of the shaft (10.a) with the ropes (4), (4.a) and (28) are illustrated.
Figure 29 shows the piston (12) on which a free pulley (21) has been attached with its base (22), and the rope (28).
Figure 30 shows the free pulley (21) with its base (22).
Figure 31 shows isometrically the cross-section of the head (30) and of the barrels (3 - 15) of the speargun with the two continuously-variable-transmission drive systems. The head (30), the winding drums (8 - 8.1 - 9) of the shaft (10), the winding drums (8.a - 8.1.a - 9.a) of the shaft (10.a) with the ropes (4), (4.a) and (28) are illustrated.
Figure 32 shows the upper view of the speargun with the two continuously-variable-transmission drive systems.
Figure 32.a shows the cross-section of the head (30) and of the barrels (3 - 15) when the speargun with the two continuously-variable-transmission drive systems is unloaded.
Figure 32.b shows the cross-section of the head (30) and of the barrels (3 - 15) when the speargun with the two continuously-variable-transmission drive systems is loaded by the first system.
Figure 32.c shows the cross-section of the head (30) and of the barrels (3 - 15) when the speargun with the two continuously-variable-transmission drive systems is also loaded by the second system.

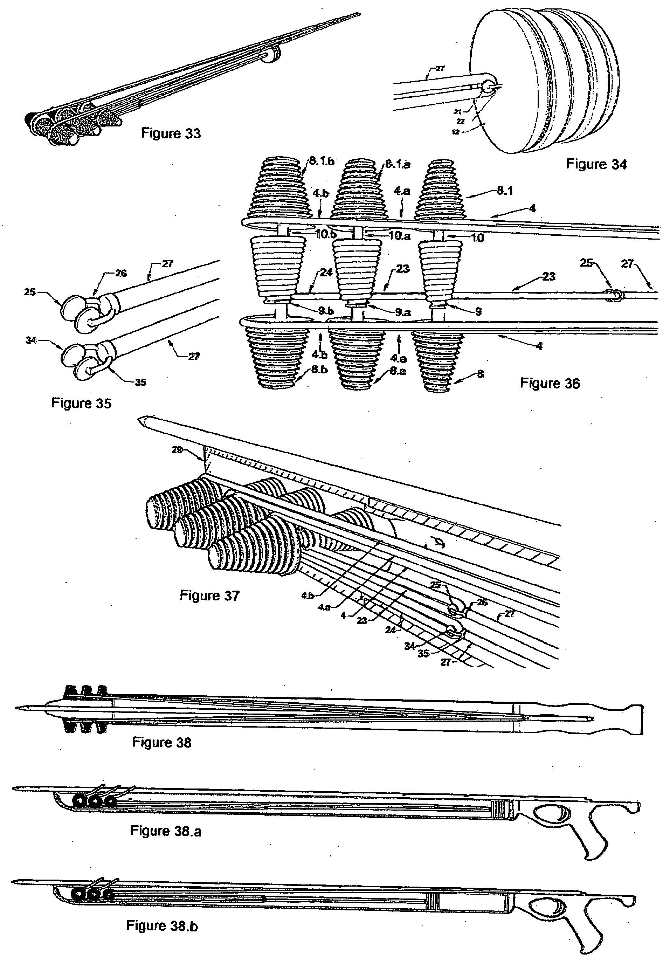

Figure 33 shows the three continuously-variable-transmission drive systems of the speargun of the third embodiment which are connected to the piston.
Figure 34 shows the piston (12) on which a free pulley (21) has been attached with its base (22), and the rope (27). The only difference to Figure 29 is the rope.
Figure 35 shows the rope (27) which at both its ends has two free pulleys (25), (34) with their bases (26), (35) since it is also connected to the piston (12) through the free pulley (21).
Figure 36 shows the upper view of the three continuously-variable-transmission drive systems of the third embodiment. The winding drums (8 - 8.1 - 9) of the shaft (10), the winding drums (8.a - 8.1.a - 9.a) of the shaft (10.a), the winding drums (8.b - 8.1.b - 9.b) of the shaft (10.b) and the free pulley (25) with the ropes (4), (4.a), (4.b), (27), (23), (24) are illustrated.
Figure 37 shows isometrically the cross-section of the head (29) and of the barrels (3 - 15) of the speargun with the three continuously-variable-transmission drive systems. The head (29), the winding drums (8 - 8.1 - 9) of the shaft (10), the winding drums (8.a - 8.1.a - 9.a) of the shaft (10.a), the winding drums (8.b - 8.1.b - 9.b) of the shaft (10.b), the two free pulleys (25), (34) with their bases (26), (35) and the ropes (4), (4.a), (4.b), (27), (23), (24) are illustrated.

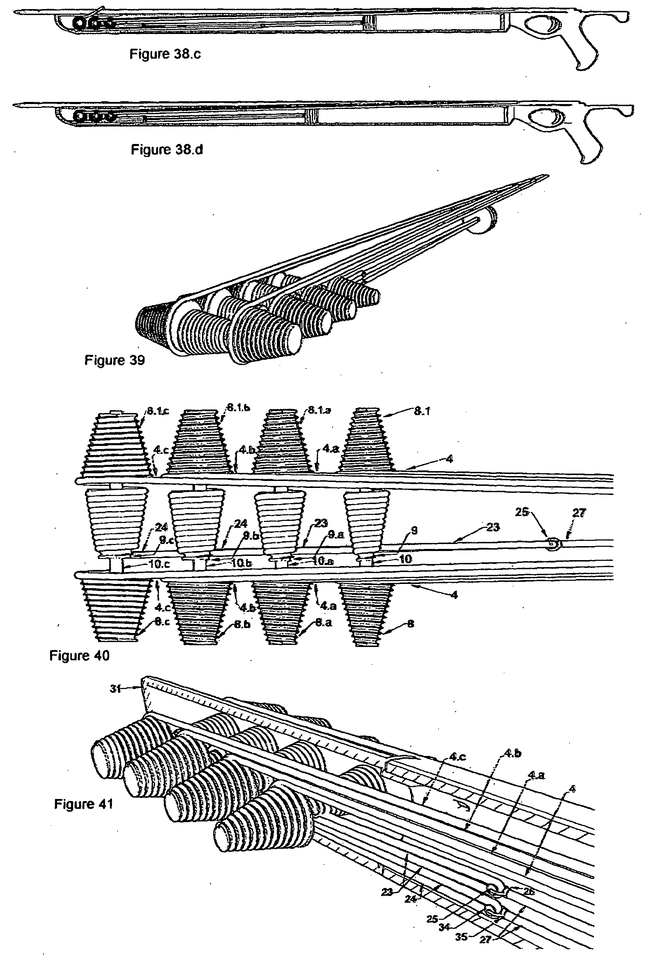

Figure 38 shows the upper view of the speargun with three continuously-variable-transmission drive systems.
Figure 38.a shows the cross-section of the head (29) and of the barrels (3 - 15) when the speargun with the three continuously-variable-transmission drive systems is unloaded.
Figure 38.b shows the cross-section of the head (29) and of the barrels (3 - 15) when the speargun with the three continuously-variable-transmission drive systems is loaded by the first system.
Figure 38.c shows the cross-section of the head (29) and of the barrels (3 - 15) when the speargun with the three continuously-variable-transmission drive systems is also loaded by the second system.
Figure 38.d shows the cross-section of the head (29) and of the barrels (3 - 15) when the speargun with the three continuously-variable-transmission drive systems is also loaded by the third system.
Figure 39 shows four continuously-variable-transmission drive systems of the fourth embodiment which are connected to the piston.
Figure 40 shows the upper view of the four continuously-variable-transmission drive systems of the fourth embodiment. The winding drums (8 - 8.1 - 9) of the shaft (10), the winding drums (8.a - 8.1.a - 9.a) of the shaft (10.a), the winding drums (8.b - 8.1.b - 9.b) of the shaft (10.b), the winding drums (8.c - 8.1.c - 9.c) of the shaft (10.c) and the free pulley (25) with the ropes (4), (4.a), (4.b), (27), (23), (24) are illustrated.
Figure 41 shows isometrically the cross-section of the head (31) and of the barrels (3 - 15) of the speargun with the four continuously-variable-transmission drive systems. The head (31), the winding drums (8 - 8.1 - 9) of the shaft (10), the winding drums (8.a - 8.1.a - 9.a) of the shaft (10.a), the winding drums (8.b - 8.1.b - 9.b) of the shaft (10.c), the winding drums (8.c - 8.1.c - 9.c) of the shaft (10.c), the two free pulleys (25), (34) with their bases (26), (35) and the ropes (4), (4.a), (4.b), (4.c), (27), (23), (24) are illustrated.

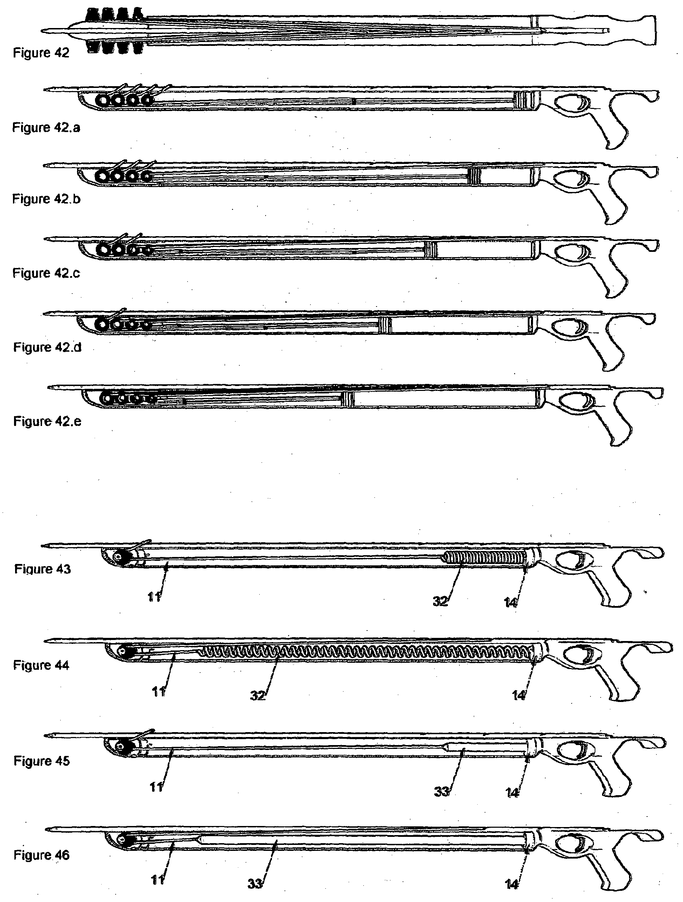

Figure 42 shows the upper view of the speargun with four continuously-variable-transmission drive systems.
Figure 42.a shows the cross-section of the head (31) and of the barrels (3 - 15) when the speargun with the four continuously-variable-transmission drive systems is unloaded.
Figure 42.b shows the cross-section of the head (31) and of the barrels (3 - 15) when the speargun with the four continuously-variable-transmission drive systems is loaded by the first system.
Figure 42.c shows the cross-section of the head (31) and of the barrels (3 - 15) when the speargun with the four continuously-variable-transmission drive systems is also loaded by the second system.
Figure 42.d shows the cross-section of the head (31) and of the barrels (3 - 15) when the speargun with the four continuously-variable-transmission drive systems is also loaded by the third system.
Figure 42.e shows the cross-section of the head (31) and of the barrels (3 - 15) when the speargun with the four continuously-variable-transmission drive systems is loaded by the fourth system.
Figure 43 shows a speargun that stores energy by the use of a spring (32), when it is unloaded. The one end of the spring (32) is connected to the plug (14) and its other end to the rope (11).
Figure 44 shows a speargun that stores energy by the use of a spring (32), when it is loaded. The one end of the spring (32) is connected to the plug (14) and its other end to the rope (11).
Figure 45 shows a speargun that stores energy by the use of a rubber element (33), when it is unloaded. The one end of the rubber element (33) is connected to the plug (14) and its other end to the rope (11).
Figure 46 shows a speargun that stores energy by the use of a rubber element (33), when it is loaded. The one end of the rubber element (33) is connected to the plug (14) and its other end to the rope (11).

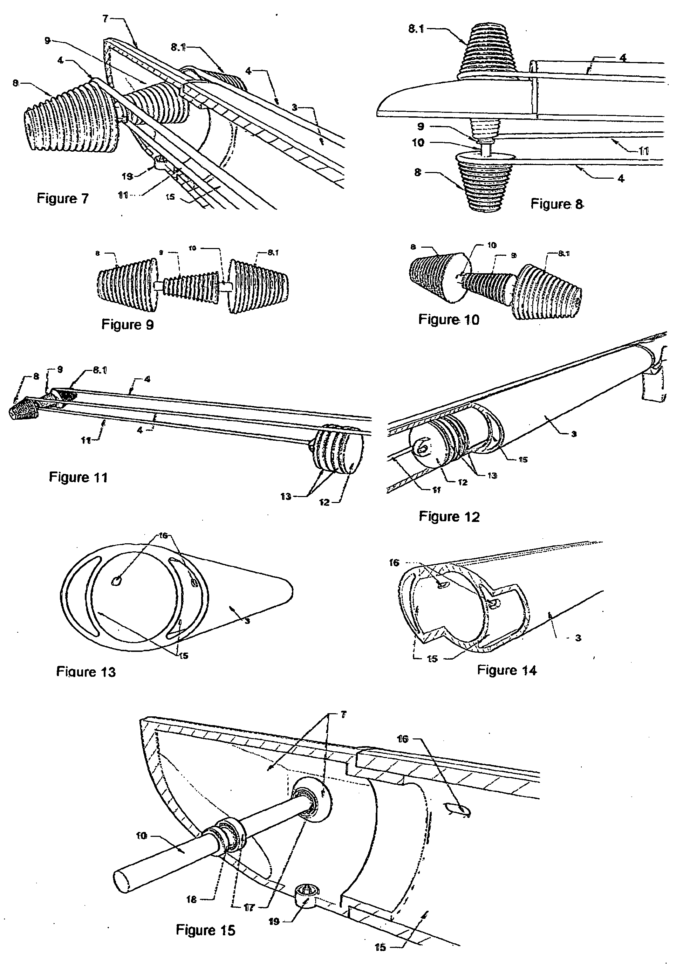

In the first embodiment and in the figures 12, 13, 14, the outer barrel (3) of the speargun is shown which includes the inner barrel (15) to which it is connected on the upper and lower sides since they are manufactured as a single body and from the same material, which leads to a very high strength of the barrels to the forces applied thereon, simplicity and lower manufacturing cost. Purpose of the barrels is to form two different chambers, where the outer one (3) will contain pressurized air, while the inner one (15) will contain pressurized air and the piston (12) with the rope (11) which will provide rotational motion to the shaft (10) of the head, figure 15. The air chambers of the two barrels (3) and (15) are connected through the holes (16) so that they can exchange gases and perform pressure equation when the air volume in the barrel (15) is increased or decreased (and the pressure in the reverse manner) due to the piston (12) during loading or release of the speargun.

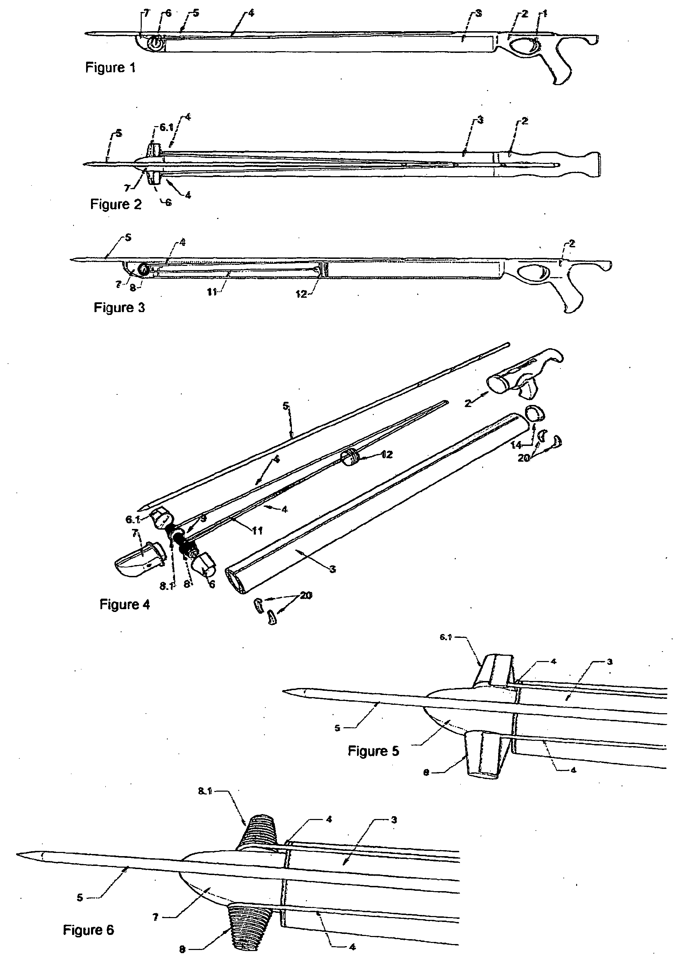

On the side of the barrels (3) and (15) where these are connected to the grip, plugs (14) and (20), figures 4, 18, are mounted, which peripherally have o-rings at the points contacting the barrels, in order to prevent air leakage therefrom. The plug (14), additionally to the o-ring, joins to the barrel in a screw manner, since both parts have threads. On the other side of the barrels (3) and (15) (where holes (16) are provided)), the head (7) and plugs (20) are mounted, figures 4,19, the plugs having peripherally o-rings at the points contacting the barrels, also to prevent air leakage therefrom. The head (7), additionally to the o-ring, joins to the barrel (15) in a screw manner, since both parts have threads. The head (7), when screwed on the barrel (15), forms an extension of the air chamber, figures 7, 15. In this way, the barrels (3), (15) and the head (7) have been transformed into a unified air-chamber body, since the air-chambers of the barrels (3), (15) are connected through the holes (16), and the head (7) is screwed on the barrel (15).

Air is introduced under pressure (5 - 30 atmospheres) by means of an outer pump in the air chamber of the barrels (3), (15) and of the head (7) through the valve (19), which is arranged in the head (7), figures 7, 15. After introduction of the air, the only way it can leak out is through the valve (19). The figure 20 shows the cross-section of the barrels (3), (15) and of the head (7), the arrows showing the pressure applied by the air. Figures 20.A and 20.B are a magnification of the figure 20, while figure 20.C shows the interior of the head (7).

When the speargun is unloaded, figures 20, 20.A, 20.B and 20.C, the pressures in the air chambers (A) and (B) which are formed by the piston (12), which peripherally has two gaskets (13), are equal, and thus the piston (12) is immobile. The provision of the air-chamber (B) is expedient and operates as an air brake for the piston (12) when, during firing-release of the speargun, the piston (12) tends to reach the end of its path and to impinge on the plug (14), thus the air chamber (B) contributes in the non-stressing of the piston, plug, barrel as well as in the quiet operation of the speargun. The quantity of air in the air chamber (B) has to be so small, that it ensures that the piston (12) will not impinge on the plug (14) and it ensures as a longer travel path of the piston (12) as possible during the release of the speargun. The air in the air chamber (B) is introduced when during the assemblying of the speargun the plug (14) is screwed on the barrel (15) and the piston is at a suitable small distance from the plug (14) in the barrel (15) thereafter the only way of air leakage is by removing the plug (14). The piston (12), in order to isolate the air chamber (B), has peripherally a second gasket (13) which is arranged opposite to the first one serving the air chamber (A), figure 25.

In order to load the speargun, force must be applied by both hands on the rope (4), figure 20.A, 20.C until it is brought in the incision of the spear of the speargun, figures 1, 2, 3 and 21. The rope (4), as it is pulled during loading, unwinds from the winding drums (8), (8.1), applies torque on them and rotates these along with the shaft (10) and the winding drum (9), on which the rope (11) winds, pulling the piston (12) thereto, figure 7, 8, 11, 20.C, 21.

The shaft (10) has at its both ends two winding drums (8 - 8.1) while at its center has the winding drum (9), figures 9, 10. The winding drums (8 - 8.1 - 9) cannot rotate around the shaft (10), i.e. the system of shaft and winding drums rotates as a whole. The central part of the shaft (10) with the winding drum (9) are arranged in the head (7), i.e. in the air chamber (A), while the end parts of the shaft (10) with the winding drums (8 - 8.1) are arranged out of the head (7), figures 6, 7, 8, 20.C. The shaft (10) has between the winding drums (8 - 8.1 - 9) two ball bearings or slide rings (17) which are fitted in the head (7), figures 15, 20.C, in order to reduce the friction generated during rotation of the shaft (10), since this is not in contact with the head (7). Also, the shaft (10) has between the ball bearings or slide rings (17) and the winding drums (8 - 8.1) two gaskets (18), figures 15, 20.C, 16, 17, which are fitted in the head (7) in order to prevent the pressurized air in the air chamber from leaking through the hole of the head (7) of the shaft (10).

When loading of the speargun is completed, figure 21, 21.A, 21.B and while the air chamber (A) has a higher pressure than the air chamber (A) of the figure 20 (in the unloaded condition), the air chamber B of figure 21, 21.B has a negative pressure approaching - 1 Atm, thus contributing to the energy to be provided to the piston during firing-release. This occurs since the air chamber (B) of the figure 20, 20.B increased significantly in volume, figure 21, 21.B (during loading), while the small quantity of air present remained the same. The speargun can operate in this way (only by the force of the air chamber (B)), i.e. without applying air pressure thereon by an outer pump, however with limited force.

The firing-release of the speargun is effected when the user presses the trigger (1) and releases the spear (5). Then, the piston (12), due to the force that it receives from the air chambers (A) and (B), shifts towards the plug (14), applying torque on the shaft (10) and on the winding drums (8 - 8.1 - 9), by means of the connected rope (11), as this unwinds from the winding drum (9). On the winding drums (8 - 8.1), in turn, the rope (4) winds, which shifts and ejects the spear (5) from the speargun.

The winding drums (8 - 8.1 - 9) of the shaft (10) exhibit a varying diameter at the points where they contact peripherally the ropes (4), (11), in order to vary the radius of application of the applied forces of the ropes to the drums and of the drums to the ropes, thus they continuously vary the transmission ratio of the motion of the piston (12) to the spear (5) during release, and of the rope (4) to the piston (12) during loading. Thus, the instant displacements, speeds of the piston (12) to the spear (5) and of the rope (4) to the piston (12), as well as the torque of the winding drums (8 - 8.1 - 9) during release and loading of the speargun vary continuously.

In this way, a continuously-variable-transmission (C.V.T.) system, figures 7, 8, 9, 10, 11, 20.C is obtained, which continuously applies the suitable transmission ratio (radius of application of the applied force of the winding drum (9) to the radius of application of the applied forces of the winding drums (8 - 8.1) and reversely) of the motion of the piston (12) to the spear (5) and of the rope (4) to the piston (12), so that the maximum energy of loading by the user and consequently the respective escape speed of the spear (5) from the speargun as well as a smooth provision of acceleration to the spear (5) during firing-release.

By a corresponding slope of the winding drums (8 - 8.1 - 9), the respective variations in the transmission ratios can be obtained, for example at the beginning of the loading the winding drums (8 - 8.1 - 9) may present a minimum torque which will continuously increase until the end of the loading, in order to equate the increasing pressure applied on the piston by the air chamber (A), where in this way the loading of the speargun may be completed by applying on the rope (4) a constant, non-variable force, or with another slope of the winding drums (8 - 8.1 - 9), the user could at first apply on the ropes (4) the maximum force which would be minimized by the end of the loading. During release, the winding drums (8 - 8.1 - 9) may present a constant torque, because while these continuously change the transmission ratio from the higher to the lower one, the pressure applied on the piston by the air chamber (A) continuously decreases. The continuously-variable-transmission drive system consists of the shaft (10), the winding drums (8 - 8.1 - 9) and the ropes (4), (11). Alternatively, the winding drums of the figures 22, 22.a, 23, 23.a, 24, 24.a can be used. All the embodiments are mentioned in figures 22, 22.a, 23, 23.a, 24, 24.a.

Another utility of the slope of the winding drums (8 - 8.1 - 9) is that in this way, the rope winds more effectively, and random winding, which could occur on a roller, is prevented, however the main cause for the proper winding of the rope is the spiral groove on the periphery of the winding drums (8 - 8.1 - 9), in which the ropes (4) and (11) are received. The direction of spiral groove of the winding drum (8) is the reverse to that of the winding drum (8.1).

The winding drums (8) and (8.1) are covered by the outer caps (6) and (6.1), which protect them against water and against the water resistance they would confront when rotating during firing-release of the speargun, figures 2, 4, 5, 26. The void created between the outer caps (6) and the winding drums (8 - 8.1) is so small that the ropes (4) fit exactly therein. The winding drums of the figures 22, 23, 24 also receive the respective outer caps that fit to their geometrical shape.

The maximum energy that the speargun can provide to the spear during firing-release is limited by the maximum energy the user can provide to the piston when stretching the ropes (4), which is proportional to the pressure of the air chamber (A) of the speargun. It is thus apparent that if the speargun had a second continuously-variable-transmission drive system, the user would be able to provide the piston with the double energy.

In the second embodiment, a speargun with two continuously-variable-transmission drive systems, figure 32, is described which can provide the spear (5) with the double energy than that of the first embodiment with one drive system.

Its components and its manner of operation are the same as those of the first embodiment. The only differences are that in this case, the head (30) that accommodates two continuously-variable-transmission drive systems is used, it has a second shaft (10.a) with the winding drums (8.a - 8.1.a - 9.a) and the respective gaskets, ball bearings or slide rings of the shaft, as well as a second loading rope (4.a). The rope (11) has been replaced by the rope (28), and as regards the piston (12) the base that connected it to the rope (11) has been replaced by the base (22) which has a free pulley (21), figures 27, 28, 29, 30, 31, 32. The winding drums (8.a - 8.1.a - 9.a) are larger in diameter than the respective ones (8 - 8.1 - 9) such that the ropes (4.a) and (28) can pass over and under the winding drums (8 - 8.1) and (9).

The winding drum (9) is now connected to the rope (28), which has the unique feature to be connected to the winding drum (9.a) of the second shaft as well as to the piston (12) through the free pulley (21), which may rotate around the shaft of the base (22) connected to the piston (12), figures 27, 28, 29, 30, 31.

By applying force on the rope (4) to load the speargun, figure 32.a, 32.b, 28, 29, this unwinds from the winding drums (8 - 8.1), thereby rotating these along with the shaft (10) and the winding drum (9) on which the rope (28) winds. The rope (28), facing at its other end resistance from the winding drum (9.a) as it is fully unwound and due to the free pulley (21), moves the piston (12) to half distance, consuming and respectively storing thereon the half of the energy that would be consumed and stored if no free pulley (21) were provided and the rope (28) were connected directly to the piston (12), where this would travel the double distance. Therefore, we double the pressure of the speargun and thus replenish the energy stored on the piston, apparently consuming the double energy for loading. The benefit of the use of the free pulley (21) moving the piston (12) to the half of the path, figure 32.b, is that we can apply force on the ropes (4.a) and load the speargun for a second time, shifting the piston from the half of its path to the end of its path, figure 32.c, finally storing on the piston the double energy than that of the speargun with one shaft. It should be noted that the user of the speargun with one shaft will fail, if he increases the pressure of the air chamber (A) too much in an attempt to increase the energy stored on the piston during loading, since there is a limit for the force that the user may apply on the ropes during loading.

During firing-release, the piston provides its energy through the free pulley (21) and the rope (28) equally to the two shafts, since these are connected by means of the ropes (4) and (4.a) on the same load, that is the rod (5). Since however the spear (5) has many incisions in various distances, and since the loading of the shafts to theses may be effected in any combination, during firing-release the shafts have a slightly different transmission ratio between them. The free pulley (21) in this case operates as a differential and applies torque on both shafts. Alternatively, the firing-release of the speargun may be effected by using only one of the two shafts.

In the third embodiment, a speargun with three continuously-variable-transmission drive systems, figure 38, is described, which can the spear (5) with the triple energy than that of the speargun with one drive system.

Its components and its manner of operation are the same as those of the second embodiment. The only differences are that in the present case, the head (29) that accommodates three continuously-variable-transmission drive systems is used, it has a third shaft (10.b) with the winding drums (8.b - 8.1.b - 9.b) and the respective gaskets, ball bearings or slide rings of the shaft, as well as a third loading rope (4.b). The rope (28) has been replaced by the rope (27) which at both its ends has two free pulleys (25), (34) since it is also connected to the piston (12) through the free pulley (21). Two further ropes (23), (24) have been provided. Regarding the rope (23), its two ends wind on the winding drums (9) and (9.a) while it also runs over the free pulley (25). Regarding the rope (24), its one end winds on the winding drum (9.b) and its other end is tied on a fixed base under the winding drum (9.b), while it also runs over the free pulley (34), figures 33, 34, 35, 36, 37, 38. The winding drums (8.b - 8.1.b - 9.b) are larger in diameter than the respective ones (8.a - 8.1.a - 9.a) such that the ropes (4.b) and (24) can pass over and under the winding drums (8.a - 8.1.a) and (9.a).

By applying force on the ropes (4) to load the speargun by means of the first shaft, figure 38.a, 38.b, these unwind from the winding drums (8 - 8.1), thereby rotating these along with the shaft (10) and the winding drum (9) on which the rope (23) winds. The rope (23), facing at its other end resistance from the winding drum (9.a) as it is fully unwound and due to the free pulley (25), moves the rope (27) which in turn drives the piston (12) through the free pulley (21). Since two free pulleys (25), (21) are interposed in series, the piston (12) moves to the one quarter of the distance, consuming and respectively storing thereon the one quarter of the energy that would be consumed and stored if no pulleys were provided and the rope (23) were connected directly to the piston (12), where this would travel the quadruple distance. Therefore, we quadruple the pressure of the speargun and thus replenish the energy stored on the piston, apparently consuming the quadruple energy for loading. The benefit of the use of the free pulleys (25) and (21) driving the piston (12) to the one quadruple of the path, figure 38.b, is that we can apply force on the ropes (4.a) and load the speargun for a second time, figure 38.c. The ropes (4.a) unwind from the winding drums (8.a - 8.1.a) thereby rotating these along with the shaft (10.a) and the winding drum (9.a) on which the rope (23) winds. The rope (23), facing at its other end resistance from the winding drum (9) and due to the free pulley (25), moves the rope (27) which in turn drives the piston (12) through the free pulley (21) from the one quarter of its path to the two quarters, figure (38.c). Thereafter, we can apply force on the ropes (4.b) to load the speargun for the third time by the last shaft, figure 38.c, 38.d. The ropes (4.b) unwind from the winding drums (8.b - 8.1.b) thereby rotating these along with the shaft (10.b) and the winding drum (9.b) on which the rope (24) winds. The rope (24), since its other end is tied on a fixed base under the winding drum (9.b) and due to the free pulley (34), moves the rope (27) which in turn drives the piston (12) through the free pulley (21) to the three quarters of its path, finally storing on the piston the triple energy than that of the speargun with one shaft. During firing-release, the piston provides its energy through the free pulleys (21), (25), (34) equally to the three continuously-variable-transmission drive systems since these are connected through the ropes (4), (4.a) and (4.b) to the same load, that is the rod (5). Since however the spear (5) has many incisions in various distances, and since the loading of the three systems in theses may be effected in any combination, during firing-release the three systems have a slightly different transmission ratio between them. The free pulleys (21), (25), (34) in this case operate as independent differentials and apply torque on the three systems. If the user does not want too much energy during firing-release of the speargun, he may alternatively use only one or two of the drive systems.

In the fourth embodiment, a speargun with four continuously-variable-transmission drive systems, figure 42, is described, which can provide the spear (5) with the quadruple energy than that of the speargun with one drive system.

Its components and its manner of operation are the same as those of the third embodiment. The only differences are that in the present case, the head (31) that accommodates four continuously-variable-transmission drive systems is used, it has a fourth shaft (10.c) with the winding drums (8.c - 8.1.c - 9.c) and the respective gaskets, ball bearings or slide rings of the shaft, as well as a fourth loading rope (4.c). The fixed base under the winding drum (9.b) holding the one end of the rope (24) has been eliminated, and this end now winds on the winding drum (9.c), figures 39, 40, 41, 42, 34, 35. The winding drums (8.c - 8.1.c - 9.c) are larger in diameter than the respective ones (8.b - 8.1.b - 9.b) such that the ropes (4.c), (24) can pass over and under the winding drums (8.b - 8.1.b) and (9.b).

By applying force on the ropes (4) to load the speargun by the first drive system, figure 42.a, 42.b, these unwind from the winding drums (8 - 8.1), thereby rotating these along with the shaft (10) and the winding drum (9) on which the rope (23) winds. The rope (23), facing at its other end resistance from the winding drum (9.a) and due to the free pulley (25), moves the rope (27) which in turn drives the piston (12) through the free pulley (21). Since two free pulleys (25), (21) are interposed in series, the piston (12) moves to one quarter of the distance, consuming and respectively storing thereon the one quarter of the energy that would be consumed and stored if no free pulleys were provided and the rope (23) were connected directly to the piston (12), where this would travel the quadruple distance. Therefore, we quadruple the pressure of the speargun and thus replenish the energy stored on the piston, apparently consuming the quadruple energy for loading. The benefit of the use of the free pulleys (25) and (21) driving the piston (12) to the one quarter of the path, figure 42.b, is that we can apply force on the ropes (4.a) and load the speargun for a second time, (42.c). The ropes (4.a) unwind from the winding drums (8.a - 8.1.a) rotating these along with the shaft (10.a) and the winding drum (9.a) on which the rope (23) winds. The rope (23), facing at its other end resistance from the winding drum (9) and due to the free pulley (25), moves the rope (27) which in turn drives the piston (12) through the free pulley (21) from the one quarter of its path to the two quarters, figure 42.c. Thereafter, we can apply force on the ropes (4.b) to load the speargun for the third time, figure 38.d. The ropes (4.b) unwinds from the winding drums (8.b - 8.1.b) thereby rotating these along with the shaft (10.b) and the winding drum (9.b) on which the rope (24) winds. The rope (24), facing at its other end resistance from the winding drum (9.c), because it is fully unwound, and due to the free pulley (34), moves the rope (27) which in turn drives the piston (12) through the free pulley (21) to the three quarters of its path. Finally, we can apply force on the ropes (4.c) to load the speargun for a fourth time, figure 42.e. The ropes (4.c) unwind from the winding drums (8.c - 8.1.c) thereby rotating these along with the shaft (10.c) and the winding drum (9.c) on which the rope (24) winds. The rope (24), facing at its other end resistance from the winding drum (9.b) and due to the free pulley (34), moves the rope (27) which in turn drives the piston (12) through the free pulley (21) to the four quarters of its path, finally storing on the piston the quadraple energy than that of the speargun with one drive system. During firing-release, the piston provides its energy through the free pulleys (21), (25), (34) equally to the four continuously-variable-transmission drive systems since these are connected through the ropes (4), (4.a), (4.b) and (4.c) to the same load, that is the rod (5). Since however the spear (5) has many incisions in various distances, and since the loading of the drive systems in these may be effected in any combination, during firing-release the systems have a slightly different transmission ratio between them. The free pulleys (21), (25), (34) in this case operate as independent differentials and apply torque on the four drive systems. If the user does not want too much energy during firing-release of the speargun, he may alternatively use only one, two or three of the drive systems.

In the fifth embodiment, a speargun storing energy by the use of a spring (32), figure 43, 44, is described. The components and the manner of operation are the same as in the first embodiment. The only difference is that in the present case, the piston (12) has been replaced by a spring (32), the one end of which is connected to the plug (14) and its other end to the rope (11) and thus no air is introduced into the speargun. Figure 44 shows the speargun in loaded condition and figure 43 in released condition.

In order to double, triple and quadruple the energy storage capacity of the speargun by the user, two, three or four continuously-variable-transmission drive systems may be used, as described in the second, third and fourth embodiments, by using all those features and components described, only replacing the piston (12) with the spring (32), which must have the double, triple or quadruple stiffness. The use of a plurality of drive systems increases additively the stored energy on the spring (32).

In the sixth embodiment, a speargun storing energy by the use of a rubber element (33), figure 45, 46, is described. The components and the manner of operation are the same as in the first embodiment. The only difference is that in the present case, the piston (12) has been replaced by a rubber element (33), the one end of which is connected to the plug (14) and its other end to the rope (11) and thus no air is introduced into the speargun. Figure 46 shows the speargun in loaded condition and figure 45 in released condition.

In order to double, triple and quadruple the energy storage capacity of the speargun by the user, two, three or four continuously-variable-transmission drive systems can be used, as described in the second, third and fourth embodiments, and by using all these features and components described, only replacing the piston (12) with the rubber element (33), which must have the double, triple or quadruple stiffness. The use of a plurality of drive systems increases additively the stored energy on the rubber element (33).

## Claims

1. A speargun with a spear drive shaft which consists of a grip (2) including a trigger mechanism (1) and connected to a barrel (3) incorporating a barrel (15) of smaller diameter, to which the head (7, 30, 29, 31) is connected which forms with the barrels (3) and (15), the air chambers of which are connected through the holes (16), a unified air chamber (A), and **characterized in that** it has at least one shaft (10, 10.a, 10.b, 10.c), at the ends of which two winding drums (8 - 8.1, 8.a - 8.1.a, 8.b - 8.1.b, 8.c - 8.1.c) are arranged and at its center a winding drum (9, 9.a, 9.b, 9.c) is arranged and **in that** the shaft (10, 10.a, 10.b, 10.c) and its winding drums (8 - 8.1 - 9, 8.a - 8.1.a - 9.a, 8.b - 8.1.b - 9.b, 8.c - 8.1.c - 9.c) are rotating together as a single body and **in that** the central part of the shaft (10, 10.a, 10.b, 10.c) with its winding drum (9, 9.a, 9.b, 9.c) are arranged in the head (7, 30, 29, 31) and in the air chamber (A) while the ends of the shaft (10, 10.a, 10.b, 10.c) and its two winding drums (8 - 8.1, 8.a - 8.1.a, 8.b - 8.1.b, 8.c - 8.1.c) are arranged outside the head (7, 30, 29, 31) and the air chamber (A) since the shaft (10, 10.a, 10.b, 10.c) passes through the holes of the head (7, 30, 29, 31) and **in that** the shaft (10, 10.a, 10.b, 10.c) has two ball bearings or slide rings (17) between the winding drum (9, 9.a, 9.b, 9.c) and the winding drums (8 - 8.1, 8.a - 8.1.a, 8.b - 8.1.b, 8.c - 8.1.c) which are fitted in the head (7, 30, 29, 31) and **in that** the shaft (10, 10.a, 10.b, 10.c) has between the ball bearings or the slide rings (17) and the winding drums (8 - 8.1, 8.a - 8.1.a, 8.b - 8.1.b, 8.c - 8.1.c) two gaskets (18) retaining the pressurized air of the air chamber (A) and fitted in the head (7, 30, 29, 31) and **in that** the winding drums (8 - 8.1, 8.a - 8.1.a, 8.b - 8.1.b, 8.c - 8.1.c) are peripherally connected to the rope (4, 4.a, 4.b, 4.c) by which they eject the spear (5) and **in that** the ejection device (12, 32, 33) is connected to the rope (11, 28, 27) and **in that** the rope (11, 28, 23, 24) is peripherally connected to the winding drum (9, 9.a, 9.b, 9.c) and **in that** by applying force on the rope (4, 4.a, 4.b, 4.c) to load the speargun, the rope (4, 4.a, 4.b, 4.c) unwinds from the winding drums (8 - 8.1, 8.a - 8.1.a, 8.b - 8.1.b, 8.c - 8.1.c) thereby rotating these along with the shaft (10, 10.a, 10.b, 10.c) and the winding drum (9, 9.a, 9.b, 9.c) on which the rope (11, 28, 23, 24) winds, pulling thereto the ejection device (12, 32, 33) and loading the speargun and **in that** the ejection device (12, 32, 33) during loading-release of the speargun pulls and unwinds the rope (11, 28, 23, 24) from the winding drum (9, 9.a, 9.b, 9.c) thereby rotating it along with the shaft (10, 10.a, 10.b, 10.c) and the winding drums (8 - 8.1, 8.a - 8.1.a, 8.b - 8.1.b, 8.c - 8.1.c), on which the rope (4, 4.a, 4.b, 4.c) winds, which shifts and ejects the spear (5) from the speargun.

2. A speargun with a spear drive shaft according to claim 1, **characterized in that** the speargun has one shaft, the shaft (10), at the ends of which two winding drums (8 - 8.1) are arranged and at the center of which a winding drum (9) is arranged and **in that** the shaft (10) and its winding drums (8 - 8.1 - 9) are rotating together as a single body and **in that** the central part of the shaft (10) along with the winding drum (9) are arranged in the head (7) and in the air chamber (A) while the ends of the shaft (10) and the two winding drums (8 - 8.1) are arranged outside the head (7) and the air chamber (A) since the shaft (10) passes through the holes of the head (7) and **in that** the shaft (10) has two ball bearings or slide rings (17) between the winding drum (9) and the winding drums (8 - 8.1) which are fitted in the head (7) and **in that** the shaft (10) has between the ball bearings or the slide rings (17) and the winding drums (8 - 8.1) two gaskets (18) retaining the pressurized air of the air chamber (A) and fitted in the head (7) and **in that** the winding drums (8 - 8.1) are peripherally connected to the rope (4) by which the user loads the speargun and **in that** the ejection device (12, 32, 33) is connected to the rope (11) which is peripherally connected to the winding drum (9) of the shaft (10) and **in that** by applying force on the rope (4) to load the speargun, the rope (4) unwinds from the winding drums (8 - 8.1) thereby rotating these along with the shaft (10) and the winding drum (9) on which the rope (11) winds, pulling thereto the ejection device (12, 32, 33) and loading the speargun and **in that** the ejection device (12, 32, 33) during loading-release of the speargun pulls and unwinds the rope (11) from the winding drum (9) thereby rotating it along with the shaft (10) and the winding drum (8 - 8.1), on which the rope (4) winds, which shifts and ejects the spear (5) from the speargun.

3. A speargun with a spear drive shaft according to claim 1, **characterized in that** the speagun has two shafts, the shafts (10, 10.a), wherein at the ends of the shaft (10) two winding drums (8 - 8.1) are arranged and at the ends of the shaft (10.a) two winding drums (8.a - 8.1.a) are arranged, and wherein at the center of the shaft (10) the winding drum (9) is arranged, and at the center of the shaft (10.a) the winding drum (9.a) is arranged, and **in that** each shaft and its winding drums are rotating together as a single body and **in that** the central part of the shafts (10 - 10.a) along with the winding drums (9 - 9.a) are arranged in the head (30) and in the air chamber (A) while the ends of the shafts (10 - 10.a) and the winding drums (8 - 8.1, 8.a - 8.1.a) are arranged outside the head (30) and the air chamber (A) since the shafts (10 - 10.a) pass through the holes of the head (30) and **in that** the shafts (10 - 10.a) have each two ball bearings or slide rings (17) between the winding drum (9) and winding drums (8 - 8.1) for the shaft (10) and between the winding drum (9.a) and winding drums (8.a - 8.1.a) for the shaft (10.a) which are fitted in the head (30) and **in that** the shafts (10 - 10.a) have each between the ball bearings or slide rings (17) and the winding drums (8 - 8.1) for the shaft (10) and the winding drums (8.a - 8.1.a) for the shaft (10.a) two gaskets (18) retaining the pressurized air of the air chamber (A) and fitted in the head (30) and **in that** the winding drums (8 - 8.1) and (8.a - 8.1.a) are peripherally connected to the ropes (4) and (4.a) by which the user loads the speargun and **in that** the ejection device (12, 32, 33) is connected to the base (22) which has the free pulley (21) and **in that** the winding drum (9) of the shaft (10) is peripherally connected to the rope (28) which is also peripherally connected to the winding drum (9.a) of the shaft (10.a) as well as to the ejection device (12, 32, 33) through the free pulley (21) and **in that** during loading of the speargun by the shaft (10) and of the winding drums (8 - 8.1 - 9) by the ropes (4- 28) and due to the fact that the free pulley (21) is interposed, the ejection device (12, 32, 33) shifts to the first half of its path and **in that** during loading of the speargun also by the shaft (10.a) and of the winding drums (8.a - 8.1.a - 9.a) by the ropes (4.a - 28) and due to the fact that the free pulley (21) is interposed, the ejection device (12, 32, 33) shifts from the first half to the second half of its path, and **in that** during firing-release, the ejection device (12, 32, 33) by means of the free pulley (21) which operates as differential and the rope (28) rotates the winding drums (9 - 9.a) along with their shafts (10 - 10.a) and the winding drums (8 - 8.1), (8.a - 8.1.a) on which the ropes (4) and (4.a) wind, by which they shift and eject the spear (5) from the speargun and **in that** the winding drums (8.a - 8.1.a - 9.a) are larger in diameter than the respective (8 - 8.1 - 9) such that the ropes (4.a) and (28) pass over and under the winding drums (8 - 8.1) and (9) respectively.

4. A speargun with a spear drive shaft according to claim 1, **characterized in that** the speargun has three shafts, the shafts (10 - 10.a - 10.b), wherein at the ends of the shaft (10) two winding drums (8 - 8.1) are arranged, at the ends of the shaft (10.a) two winding drums (8.a - 8.1.a) are arranged, and at the ends of the shaft (10.b) two winding drums (8.b - 8.1.b) are arranged, and wherein at the center of the shaft (10) the winding drum (9) is arranged, at the center of the shaft (10.a) the winding drum (9.a) is arranged, at the center of the shaft (10.b) the winding drum (9.b) is arranged, and **in that** each shaft with its winding drums are rotating together as a single body and **in that** the central part of the shaft (10 - 10.a - 10.b) along with the winding drum (9 - 9.a - 9.b) are arranged in the head (29) and in the air chamber (A) while the ends of the shafts (10 - 10.a - 10.b) and the winding drums (8 - 8.1, 8.a - 8.1.a - 8.b - 8.1.b) are arranged outside the head (29) and the air chamber (A) since the shafts (10 - 10.a - 10.b) pass through the holes of the head (29) and **in that** the shafts (10 - 10.a - 10.b) have each two ball bearings or slide rings (17) between the winding drum (9) and winding drums (8 - 8.1) for the shaft (10) and between the winding drum (9.a) and winding drums (8.a - 8.1.a) for the shaft (10.a) and between the winding drum (9.b) and winding drums (8.b - 8.1.b) for the shaft (10.b) which are fitted in the head (29) and **in that** the shafts (10 - 10.a - 10.b) have each between the ball bearings or slide rings (17) and the winding drums (8 - 8.1) for the shaft (10), the winding drums (8.a - 8.1.a) for the shaft (10.a) and the winding drums (8.b - 8.1.b) for the shaft (10.b) two gaskets (18) retaining the pressurized air of the air chamber (A) and fitted in the head (29) and **in that** the winding drums (8 - 8.1), (8.a - 8.1.a) and (8.b - 8.1.b) are peripherally connected to the ropes (4), (4.a) and (4.b) with which the user loads the speargun and **in that** the ejection device (12, 32, 33) is connected to the base (22) which has the free pulley (21) and **in that** the free pulley (21) is connected to the rope (27) which has at both its ends two free pulleys (25), (34) through their bases (26), (35) and **in that** the winding drum (9) of the shaft (10) is peripherally connected to the rope (23) which is also peripherally connected to the winding drum (9.a) of the shaft (10.a) as well as to the free pulley (25) of the rope (27) and **in that** the winding drum (9.b) of the shaft (10.b) is peripherally connected to the rope (24), the other end of which is tied to a fixed base of the head (29) while it is also connected to the free pulley (34) of the rope (27) and **in that** during loading of the speargun by the shaft (10) and of the winding drums (8 - 8.1 - 9) by the ropes (4 - 23 - 27) and due to the fact that two free pulleys (25 - 21) are interposed, the ejection device (12, 32, 33) shifts to the one quarter of its path, and **in that** during loading of the speargun also by the shaft (10.a) and of the winding drums (8.a - 8.1.a - 9.a) by the ropes (4.a - 23 - 27) and due to the fact that two free pulleys (25 - 21) are interposed, the ejection device (12, 32, 33) shifts from the one quarter to the second quarter of its path, and **in that** during loading of the speargun also by the shaft (10.b) and of the winding drums (8.b - 8.1.b - 9.b) by the ropes (4.b - 24 - 27) and due to the fact that two free pulleys (34 - 21) are interposed, the ejection device (12, 32, 33) shifts from the second quarter to the third quarter of its path, and **in that** during firing-release, the ejection device (12, 32, 33) through the free pulleys (21 - 25 - 34) which operate as differentials and the ropes (27 - 23 -24) rotates the winding drums (9 - 9.a - 9.b) along with their shafts (10 - 10.a - 10.b) and the winding drums (8 - 8.1), (8.a - 8.1.a), (8.b - 8.1.b) on which the ropes (4), (4.a), (4.b) wind, by which they shift and eject the spear (5) from the speargun and **in that** the winding drums (8.b - 8.1.b - 9.b) are larger in diameter than the respective winding drums (8.a - 8.1.a - 9.a) and these larger than the winding drums (8 - 8.1 - 9) such that the ropes (4.b - 24) and (4.a - 23) pass over and under the winding drums (8.a - 8.1.a - 9.a) and (8 - 8.1 -9) respectively.

5. A speargun with a spear drive shaft according to claim 1, **characterized in that** the spear gun has four shafts, the shafts (10 - 10.a - 10.b - 10.c), wherein at the ends of the shaft (10) two winding drums (8 - 8.1) are arranged, at the ends of the shaft (10.a) two winding drums (8.a - 8.1.a) are arranged, at the ends of the shaft (10.b) two winding drums (8.b - 8.1.b) are arranged, and at the ends of the shaft (10.c) two winding drums (8.c - 8.1.c) are arranged, and wherein at the center of the shaft (10) the winding drum (9) is arranged, at the center of the shaft (10.a) the winding drum (9.a) is arranged, at the center of the shaft (10.b) the winding drum (9.b) is arranged, and at the center of the shaft (10.c) the winding drum (9.c) is arranged, and **in that** each shaft and its winding drums are rotating together as a single body and **in that** the central part of the shafts (10 - 10.a - 10.b - 10.c) along with the winding drums (9 - 9.a - 9.b - 9.c) are arranged in the head (31) and the air chamber (A) while the ends of the shafts (10 - 10.a - 10.b - 10.c) and the winding drums (8 - 8.1 - 8.a - 8.1.a - 8.b - 8.1.b - 8.c - 8.1.c) are arranged outside the head (31) and the air chamber (A) since the shafts (10 - 10.a - 10.b - 10.c) pass through the holes of the head (31) and **in that** the shafts (10 - 10.a - 10.b - 10.c) have each two ball bearings or slide rings (17) between the winding drum (9) and winding drums (8 - 8.1) for the shaft (10), between the winding drum (9.a) and winding drums (8.a - 8.1.a) for the shaft (10.a), between the winding drum (9.b) and winding drums (8.b - 8.1.b) for the shaft (10.b), and between the winding drum (9.c) and winding drums (8.c - 8.1.c) for the shaft (10.c), which are fitted in the head (31) and **in that** the shafts (10 - 10.a - 10.b - 10.c) have each between the ball bearings or slide rings (17) and the winding drums (8 - 8.1) for the shaft (10), the winding drums (8.a - 8.1.a) for the shaft (10.a), the winding drums (8.b - 8.1.b) for the shaft (10.b), the winding drums (8.c - 8.1.c) for the shaft (10.c) two gaskets (18) retaining the pressurized air of the air chamber (A) and fitted in the head (31) and **in that** the winding drums (8 - 8.1), (8.a - 8.1.a), (8.b - 8.1.b) and (8.c - 8.1.c) are peripherally connected to the ropes (4), (4.a), (4.b) and (4.c) by which the user loads the speargun and **in that** the ejection device (12, 32, 33) is connected to the base (22) which has the free pulley (21) and **in that** the free pulley (21) is connected to the rope (27) which has at both its ends two free pulleys (25), (34) through their bases (26), (35) and **in that** the winding drum (9) of the shaft (10) is peripherally connected to the rope (23) which is also peripherally connected to the winding drum (9.a) of the shaft (10.a) as well as to the free pulley (25) of the rope (27) and **in that** the winding drum (9.b) of the shaft (10.b) is peripherally connected to the rope (24) which is also peripherally connected to the winding drum (9.c) of the shaft (10.c) as well as to the free pulley (34) of the rope (27) and **in that** during loading of the speargun by the shaft (10) and of the winding drums (8 - 8.1 - 9) by the ropes (4, 23, 27) and due to the fact that two free pulleys (25 - 21) are interposed, the ejection device (12, 32, 33) shifts to the one quarter of its path and **in that** during loading of the speargun also by the shaft (10.a) and of the winding drums (8.a - 8.1.a - 9.a) by the ropes (4.a, 23, 27) and due to the fact that two free pulleys (25 - 21) are interposed, the ejection device (12, 32, 33) shifts from the one quarter to the second quarter of its path, and **in that** during loading of the speargun also by the shaft (10.b) and of the winding drums (8.b - 8.1.b - 9.b) by the ropes (4.b, 24, 27) and due to the fact that two free pulleys (34 - 21) are interposed, the ejection device (12, 32, 33) shifts from the second quarter to the third quarter of its path, and **in that** during loading of the speargun also by the shaft (10.c) and of the winding drums (8.c - 8.1.c - 9.c) by the ropes (4.c, 24, 27) and due to the fact that two free pulleys (34 - 21) are interposed, the ejection device (12, 32, 33) shifts from the third quarter to the fourth quarter of its path, **in that** during firing-release, the ejection device (12, 32, 33) through the free pulleys (21 - 25 - 34) which operate as differentials and the ropes (27 - 23 -24) rotates the winding drums (9 - 9.a - 9.b - 9.c) along with their shafts (10 - 10.a - 10.b - 10.c) and their winding drums (8 - 8.1), (8.a - 8.1.a), (8.b - 8.1.b), (8.c - 8.1.c) on which the ropes (4), (4.a), (4.b) and (4.c) wind, by which they shift and eject the spear (5) from the speargun and **in that** the winding drums (8.c - 8.1.c - 9.c) are larger in diameter than the respective winding drums (8.b - 8.1.b - 9.b) and these are larger in diameter than the respective winding drums (8.a - 8.1.a - 9.a) and these are larger than the winding drums (8 - 8.1 - 9) such that the ropes (4.c - 24), (4.b - 24) and (4.a - 23) pass over and under the winding drums (8.b - 8.1.b - 9.b), (8.a - 8.1.a - 9.a) and (8 - 8.1 -9).

6. A speargun with a spear drive shaft according to claims 1 to 5, **characterized in that** the winding drums (8 - 8.1 - 9, 8.a - 8.1a - 9.a, 8.b - 8.1b - 9.b, 8.c - 8.1c - 9.c) have a varying diameter at the points where they peripherally contact the ropes (4, 4.a, 4.b, 4.c, 11, 28, 23, 24) and **in that** they change the radius of application of the applied forces of the ropes (4, 4.a, 4.b, 4.c, 11, 28, 23, 24) to the winding drums (8 - 8.1 - 9, 8.a - 8.1a - 9.a, 8.b - 8.1b - 9.b, 8.c - 8.1c - 9.c) and of the winding drums (8 - 8.1 - 9, 8a - 8.1a - 9a, 8b - 8.1b - 9b, 8c - 8.1c - 9c) to the ropes (4, 4.a, 4.b, 4.c, 11, 28, 23, 24) and **in that** they continuously change the transmission ratio of the motion of the ejection device (12, 32, 33) to the spear (5) during release and of the ropes (4, 4.a, 4.b, 4.c) to the ejection device (12, 32, 33) during loading and **in that** they change their torque during loading and release of the speargun and **in that** they continuously change the instant displacements, speeds of the ejection device (12, 32, 33) to the spear (5) during release of the speargun and **in that** the shafts (10, 10.a, 10.b, 10.c) with their winding drums (8 - 8.1 - 9, 8.a - 8.1a - 9.a, 8.b - 8.1b - 9.b, 8.c - 8.1c - 9.c) and their ropes (4, 4.a, 4.b, 4.c, 11, 28, 23, 24) constitute a continuously-variable-transmission drive system.

7. A speargun with a spear drive shaft according to claims 1 to 6, **characterized in that** the winding drums (8 - 8.1 - 9, 8.a - 8.1a - 9.a, 8.b - 8.1b - 9.b, 8.c - 8.1c - 9.c) have peripherally a spiral groove in which the ropes (4, 4.a, 4.b, 4.c, 11, 28, 23, 24) connected to them are received, and **in that** the direction of the spiral groove of the winding drums (8, 8.a, 8.b, 8.c) is reverse to that of the winding drums (8.1, 8.1.a, 8.1.b, 8.1.c) and **in that** the winding drums (8 - 8.1, 8a - 8.1.a, 8.b - 8.1.b, 8.c - 8.1.c) are surrounded by outer caps (6 - 6.1).

8. A speargun with a spear drive shaft according to claims 1 to 5, **characterized in that** the ejection device is the piston (12) which during release of the speargun is driven by the air pressure of the air chamber (A).

9. A speargun with a spear drive shaft according to claim 8, **characterized by** the air chamber (B) formed by the piston (12) and having a small quantity of air which the piston (12) uses in order to stop, when during its expansion tends to reach the end of its path, and in that the air chamber (B) during loading of the speargun has a negative pressure which approaches -1 atm which is provided to the piston (12) during release of the speargun and in that the piston (12) has peripherally two oppositely arranged gaskets (13) and in that the piston (12) during release of the speargun moves in the barrel (15) to the opposite direction than that of the spear (5) and in that the piston (12) at its front view is oval and in that the spear (5) is arranged on the barrel (3).

10. A speargun with a spear drive shaft according to claims 1 to 5, **characterized in that** the ejection device is a spring (32) and **in that** the barrels (3) and (15) constitute a unified item and are manufactured as a single body.

11. A speargun with a spear drive shaft according to claims 1 to 5, **characterized in that** the ejection device is a rubber element (33).

## Patentansprüche

1. Handharpune mit Pfeilbewegungsachse, die aus einem Griff (2) mit einem Abzugsmechanismus (1) besteht und mit einem Rohr (3) verbunden ist, in dem sich ein Rohr kleineren Durchmessers (15) befindet, mit dem der Kopf (7, 30, 29, 31) verbunden ist, der mit den Rohren (3) und (15) - welche ihre Luftkammern mit den Öffnungen verbinden - eine einheitliche Luftkammer schafft und mindestens eine Achse (10, 10.a, 10.b, 10.c) hat, an deren beiden entgegengesetzen Endstellen zwei Umwinkeltrommeln (8-8.1, 8.a-8.1.a, 8.b-8.1.b, 8.c-8.1.c) angebracht sind, sowie eine Umwinkel-trommel (9, 9a, 9b, 9c) in der Mitte. Die Achse (10, 10a, 10b, 10c) und ihre Umwinkeltrommeln (8-8.1-9, 8.a-8.1.a-9.a, 8.b-8.1.b-9.b, 8.c-8.1.c-9.c) drehen sich zusammen wie eine Einheit. Charakteristisch ist auch, dass der zentrale Teil der Achse (10, 10.a, 10.b, 10.c) und seine Umwinkel-trommeln (8-8.1-9, 8.a-8.1.a-9.a, 8.b-8.1.b-9.b, 8.c-8.1.c-9.c) sich wie eine Einheit zusammendrehen und dass dieser zentrale Teil der Achse (10, 10.a, 10.b, 10.c) zusammen mit seiner Umwinkeltrom- mel (9, 9.a, 9.b, 9.c) innerhalb des Kopfes (7, 30, 29, 31) in der Luftkammer (A) ist, während die entgegengesetzten Endstellen der Achse (10, 10.a, 10.b, 10.c) und ihre beiden Umwinkeltrommeln (8-8.1, 8.a-8.1.a, 8.b-8.1.b, 8.c-8.1.c) außerhalb des Kopfes (7, 30, 29, 31) und der Luftkammer (A) angebracht sind. Die Achse (10, 10.a, 10.b, 10.c) geht durch die Kopföffnungen (7, 30, 29, 31) und ist mit zwei Kugellagern oder Gleitringen(17) versehen, zwischen der Umwinkeltrommel (9, 9.a, 9.b, 9.c) und den (8-8.1, 8.a-8.1.a, 8.b-8.1.b, 8.c-8.1.c) , die in den Kopf (7, 30, 29, 31) eingelassen sind. Die Achse (10, 10.a, 10.b, 10.c) hat zwischen den Kugellagern (17) und den Umwinkeltrommeln (8-8.1, 8.a-8.1.a, 8.b-8.1.b, 8.c-8.1.c) zwei Säume* (18), die die unter Druck stehende Luft der Luftkammer (A) zurückhalten, welche in den Kopf (7, 30, 29, 1) eingelassen sind. Die Umwinkeltrommeln ( 8-8.1, 8.a-8.1.a, 8.b-8.1.b, 8.c-8.1.c) sind mit der Schnur (4, 4.a, 4.b, 4.c) perimetrisch verbunden, womit der Pfeil (5) abgeschossen wird. Die Abschussvorrichtung (12, 32, 33) ist mit der Schnur (11, 28, 27) und die Schnur (11, 28, 23, 24) mit der Umwinkelkammer (9, 9.a, 9.b, 9.c) verbunden. Indem man an der Schnur (4, 4.a, 4.b, 4.c) Kraft anwendet, um die Harpune zu laden, wickelt sich die Schnur (4, 4.a, 4.b, 4.c) von den Umwinkeltrommeln (8-8.1, 8.a-8.1.a, 8.b-8.1.b, 8.c-8.1.c) aus und dreht diese zusammen mit der Achse (10, 10.a, 10.b, 10.c) und der Umwinkelkammer (9, 9.a, 9.b, 9.c), die sich von der Schnur (11, 28, 4, 24) umge- wickelt werden. Dabei wird die Abschussvorrichtung (12, 32, 33) gezogen und die Harpune ist Geladen. Beim Abschuss zieht die Abschussanlage (12, 32, 33) die Schnur (11, 28, 23, 24), wickelt sie von der Umwinkelkammer (9, 9.a, 9.b, 9.c) aus und dreht diese zusammen mit der Achse (10, 10.a, 10.b, 10.c) und den Umwinkelkammern (8-8.1, 8.a-8.1.a, 8.b-8.1.b, 8.c-8.1.c), die sich von der Schnur (4, 4.a, 4.b, 4.c), die den Pfeil abschiesst, umgewickelt werden.

2. Handharpune mit Pfeilbewegungsachse gemäß Anspruch 1. Dabei ist es charakteristisch, dass die Handharpune eine Achse hat, die Achse (10), an deren beiden entgegengesetzten Endstellen zwei Umwinkeltrommeln (8-8.1) angebracht sind und eine Umwinkeltrommel (9) in deren Mitte und dass sich die Achse (10) und die Umwinkeltrommeln (8-8.1-9) zusammendrehen, wie eine Einheit. Der zentrale Teil der Achse (10) und die Umwinkel-trommel (9) sind in dem Kopf (7) und der Luftkammer (A) angebracht, während die beiden ent- gegengesetzten Endstellen der Achse (10) und die beiden Umwinkeltrommeln (8-8.1) außerhalb des Kopfes (7) und der Luftkammer (A) sind, sodass die Achse (10) durch die Kopföffnungen (7) durch-geht. Die Achse (10) hat zwei Kugellager oder Gleitringe (17) zwischen der Umwinkeltrommel (9) und den (8-8.1), die in den Kopf (7) eingelassen sind. Die Achse (10) ist zwischen den Kugel-lagern (17) und den Umwinkeltrommeln (8-8.1) mit zwei Säumen (18) versehen, welche die unter Druck stehende Luft der Luftkammer (A) zurückhalten und in den Kopf (7) eingelassen sind. Die Umwinkeltrommeln (8-8.1) sind mit der Schnur (4) verbunden, mit der man die Harpune abschuss- bereit macht. Die Abschussvorrichtung (12, 32, 33) ist mit der Schnur (11) verbunden, welche mit der Umwinkeltrommel (9) der Achse (10) verbunden ist. Indem man an der Schnur(4) Kraft ausübt, um die Harpune zu laden, wickelt sich die Schnur (4) von den Umwinkeltrommeln (8-8.1) aus und dreht diese zusammen mit der Achse (10) und der Umwinkeltrommel (9), die sich von der Schnur (11) umgewickelt wird. Dadurch wird die Abschussvorrichtung (12, 32, 33) gezogen und die Harpune ist geladen. Beim Abschuss zieht die Abschussvorrichtung (12, 32, 33) die Schnur (11) und wickelt sie von der Umwinkeltrommel (9) aus. Diese dreht zusammen die Achse (10) und die Umwinkeltrommeln (8-8.1), die sich von der Schnur (4) umgewickelt werden und so wird der Pfeil abgeschossen.

3. Handharpune mit Pfeilachse, gemäß Anspruch 1, das zwei Achsen (10-10.a) hat, an deren beiden entgegengesetzen Endstellen zwei Umwinkeltrommeln, (8-8.1) an der Achse (10) und (8.a-8.1.a)an der Achse (10.a), angebracht sind. Sie sind in der Mitte mit je einer Umwinkeltrommel versehen,die (9) an der Achse (10) und die (9.a) in der Achse (10.a). Jede Achse dreht sich mit ihrerUmwinkeltrommel zusammen, wie eine Einheit. Der zentrale Teil der Achsen (10-10.a) und die Umwinkeltrommeln ((9-9.a) sind innerhalb des Kopfes (30) und der Luftkammer (A), während die Spitzen der Achsen (10-10.a) und die Umwinkeltrommeln (8-8.1-8.a-8.1.a) außerhalb des Kopfes (30) und der Luftkammer (A) angebracht sind, sodass die Achsen (10-10.a) durch die Kopföffnungen durchgehen. Die Achsen (10-10.a) sind mit je zwei Kugellagern (17) versehen, zwischen der Umwinkeltrommel (9) und den (8-8.1) für die Achse (10) und zwischen der Um-winkeltrommel (9.a) und den (8.a-8.1.a) für die Achse (10.a), welche in den Kopf (30) eingelassen sind. Die Achsen (10-10.a) sind zwischen den Kugellagern (17) und der Umwinkeltrommeln (8-8.1) für die Achse (10) und (8.a-8.1.a) für die Achse (10.a) mit je zwei Säumen (18) versehen. Diese halten die unter Druck stehende Luft zurück und sind in den Kopf (30) eingelassen. Die Um-winkeltrommeln (8-8.1) und (8.a-8.1.a) sind mit den Schnuren (4) und (4.a) verbunden, mit denen die Harpune geladen wird. Die Abschussvorrichtung (12, 32, 33) ist mit der Basis (22) verbunden, welche mit einer freien Winde (21) versehen ist. Die Umwinkeltrommel (9) der Achse (10) ist mit der Schnur (28) verbunden, welche mit der Umwinkeltrommel (9.a) der Achse (10.a), sowie der Abschussvorrichtung (12,32, 33) durch die freie Winde (21) vebunden ist. Beim Abschuss mit der Achse (10) und der Umwinkeltrommeln (8-8.1-9) durch die Schnuren (4-28) und weil die freie Winde dazwischenliegt, verschiebt sich die Abschussvorrichtung (12, 32, 33) nur zur Hälfte ihrer Strecke. Während man die Harpune auch mit der Achse (10.a) und die Umwinkeltrommeln durch die Schnuren (4.a-28) -und weil die freie Winde (21) dazwischenliegt- abschussbereit stellt, verschiebt sich die Abschussvorrichtung (12, 32, 33) von der ersten zur zweiten Hälfte ihrer Strecke. Durch die freie Winde (21), die als Differentialgetriebe fungiert und die Schnur (28) dreht die Ab-schussvorrichtung (12, 32, 33) beim Abschuss die Umwinkeltrommeln (9-9.a) zusammen mit ihren Achsen (10-10.a.) und ihre Umwinkeltrommeln (8-8.1), (8.a-8.1.a). Diese werden von den Schnuren (4) und (4.a) umgewickelt, die den Pfeil (5) bewegen und abschiessen. Die Umwinkeltrommeln (8.a- 8.1.a-9.a) sind im Durchmesser nur so viel größer als die (8-8.1-9), wie es nötig ist, damit die Schnuren (4.a) und (28) über und unter die Umwinkeltrommeln (8-8.1) und (9) durchgehen können.

4. Handharpune mit Pfeilachse, gemäß Anspruch 1, die mit drei Achsen (10-10.a-10.b) versehen ist, an deren Endstellen zwei Umwinkeltrommeln angebracht sind, die (8-8.1) für die Achse (10) und die (8.a-8.1.a) für die Achse (10.a), sowie die (8.b-8.1.b) für die Achse (10.b). Sie sind in der Mitte mit je einer Umwinkeltrommel versehen, die (9) an der Achse (10), die (9.a) an der Achse (10.a) und die (9.b) an der Achse (10.b). Jede Achse dreht sich mit ihren Umwinkelkammern zusammen, wie eine Einheit. Der zentrale Teil der Achsen (10-10.a-10.b) zusammen mit den Umwinkelkammern (9-9.a-9.b) sind in dem Kopf (29) und in der Luftkammer (A) angebracht, während die Endstellen der Achsen (10-10.a-10.b) und die Umwinkeltrommeln (8-8.1-8.a-8.1.a-8.b-8.1.b) sich außerhalb des Kopfes (29) und der Luftkammer (A) befinden. Die Achsen (10-10.a-10.b) gehen durch die Öffnungen des Kopfes (29) und sind mit je zwei Kugellagern oder Gleitringen (17) versehen, und zwar zwischen der Umwinkeltrommel (9) und den (8-8.1) für die Achse (10), zwischen der Um- winkeltrommel (9.a) und den (8.a-8.1.a) für die Achse (10.a) und zwischen der Umwinkeltrommel (9.b) und den (8.b-8.1.b) für die Achse (10.b), welche im Kopf (29) eingelassen sind. Die Achsen (10-10.a-10.b) sind zwischen den Kugellagern (17) und den Umwinkeltrommeln (8-8.1) für die Achse (10), (8.a-8.1.a) für die Achse (10.a) und (8.b-8.1.b) für die Achse (10.b) mit je zwei Säumen (18) versehen, welche die unter Druck stehende Luft zurückhalten. Sie sind in dem Kopf (29) eingelassen. Die Umwinkeltrommeln (8-8.1), (8.a-8.1.a) und (8.b-8.1.b) sind perimetrisch mit den Schnuren (4), (4.a) und (4.b) verbunden. Mit diesen kann man die Harpune laden. Die Abschuss- vorrichtung (12, 32, 33) ist mit der Basis (22) an der freien Winde (21) verbunden. Die freie Winde (21) ist mit der Schnur (27) verbunden. Diese ist an ihren beiden Endstellen durch die jeweilige Basis (26), (35) mit zwei freien Winden (21) versehen. Die Umwinkeltrommel (9) der Achse (10) ist mir der Schnur (23) perimetrisch verbunden, die ebenso perimetrisch mit der Unwinkeltrommel (9.a) der Achse (10.a), sowie mit der freien Winde (25) der Schnur (27) verbunden ist. Die Um- winkeltrommel (9.b) der Achse (10.b) ist perimetrisch verbunden mit der Schnur (24), deren zweite Endstelle, sowohl mit einer festen Basis des Kopfes (29), als auch mit der freien Winde (34) der Schnur (27) verbunden ist. Beim Laden der Harpune mit der Achse (10) und den Umwinkel- trommeln (8-8.1-9) durch die Schnuren (4-2-27) und weil zwei freie Winde (25-21) dazwischen- liegen, verschiebt sich die Abschussanlage (12, 32, 33) zu einem Viertel ihrer Strecke. Beim Laden der Harpune mit der Achse (10.a) und den Umwinkeltrommeln (8.a-8.1.a-9) durch die Schnuren (4.a- 23-27) verschiebt sich dieAbschussanlage (12, 32, 33) von einem Viertel zu zwei Viertel ihrer Strecke, weil zwei freie Winden (25, 21) dazwischenliegen. Beim Laden der Harpune mit der Achse (10.b) und den Umwinkeltrommeln (8.b-8.1.b-9.b) durch die Schnuren (4.b-24-27) verschiebt sich die Abschussvorrichtung von zwei Viertel zu drei Viertel ihrer Strecke, weil zwei freie Winden (34-21) dazwischenliegen. Beim Abschuss dreht dann die Abschussvorrichtung (12, 32, 33) die Umwinkeltrommeln (9-9.a-9.b) zusammen mit ihren Achsen (10-10.a-10.b) durch die freien Winden (21-25-34), die als Differential fungieren und die Schnuren (27-2-24). Ihre Umwinkeltrommeln (8-8.1), (8.a-8.1.a), (8.b-81.b), die von den Schnuren (4), (4.a), (4.b) umgewickelt werden, schiessen den Pfeil (5) ab. Die Umwinkeltrommeln (8.b-8.1.b-9.b) sind im Durchmesser nur so viel größer als die (8.a-8.1.a-9.a) und diese nur so viel größer als die (8-8.1-9), wie es nötig ist, damit die Schnuren (4.b-24) und (4.a-23) über und unter die Umwinkeltrommeln (8.a8.1.a-9.a) und (8-8.1-9) durch-gehen können.

5. Handharpune mit Pfeilachse, gemäß Anspruch 1, die mit vier Achsen versehen ist, die Achsen (10-10.a-10.b-10.c), an deren Endstellen zwei Umwinkeltrommeln angebracht sind, die (8-8.1) an der Achse (10), die (8.a-8.1.a) an der Achse (10.a), die (8.b-8.1.b) an der Achse (10.b) und die (8.c-8.1c) an der Achse (10.c). In der Mitte sind sie mit je einer Umwinkeltrommel versehen, die (9) an der Achse (10), die (9.a) an der Achse (10.a), die (9.b) an der Achse (10.b) und die (9.c) an der Achse (10.c). Jede Achse dreht sich mit ihren Umwinkeltrommeln zusammen, wie eine Einheit. Der zentrale Teil der Achsen (10-10.a-10.b-10.c) und die Umwinkeltrommeln (9-9.a-9.b-9.c) sind innerhalb des Kopfes (31) und der Luftkammer (A) angebracht, während die Endstellen der Achsen (10-10.a-10.b-10.c) und die Umwinkeltrommeln (8-8.1-8.a-8.1.a-8.b-8.1.b-8.c-8.1.c) außerhalb des Kopfes (31) und der Luftkammer (A) angebracht sind. Die Achsen (10-10.a-10.b-10.c) gehen durch die Öffnungen des Kopfes (31) durch. Die Achsen (10-10.a-10.b-10.c) sind mit je zwei Winden oder Gleitringen (17) versehen, zwischen der Umwinkeltrommel (9) und den (8-8.1) für die Achse (10) und zwischen der Umwinkeltrommel (9.a) und den (8.a-8.1.a) für die Achse (10.a) und zwischen der Umwinkeltrommel (9.b) und den (8.b-8.1.b) für die Achse (10.b) und zwischen der Umwinkeltrommel (9.c) und den (8.c-8.1.c) für die Achse (10.c), die in das Kopf (31) ein-gelassen sind. Die Achsen (10-10.a-10.b-10.c) sind zwischen den Winden (17) und den Umwinkel- trommeln (8-8.1) für die Achse (10), (8.a-8.1.a) für die Achse (10.a), (8.b-8.1b) für die Achse (10.b), (8.c-8.1.c) für die Achse (10.c) mit je zwei Säumen (18) versehen, die die unter Druck stehende Luft der Luftkammer (A) zurückhalten und in das Kopf (31) eingelassen sind. Die Umwinkeltrommeln (8-8.1), (8.a-8.1.a), (8.b-8.1.b) und (8.c-8.1.c) sind mit den Schnuren (4), (4.a), (4.b) und (4.c) peri- metrisch verbunden, womit man die Harpune laden kann. Die Abschussvorrichtung (12, 32, 33) ist mit der Basis (22) verbunden, die mit einer freien Winde (21) versehen ist. Die freie Winde (21) ist mit der Schnur (27) verbunden, an deren beiden Endstellen zwei freie Winden (25), (34) durch ihre Basis (26), (35) angebracht sind. Die Umwinkeltrommel (9) der Achse (10) ist mit der Schnur (23) perimetrisch verbunden. Diese ist mit der Umwinkeltrommel (9.a) der Achse (10.a), sowie auch mit der freien Winde (25) der Schnur (27) perimetrisch verbunden. Die Umwinkeltrommel (9.b) der Achse (10.b) ist mit der Schnur (24) perimetrisch verbunden. Diese ist mit der Umwinkeltrommel (9.c) der Achse (10.c) und der freien Winde (34) der Schnur (27) perimetrisch verbunden. Beim Laden der Harpune mit der Achse (10) und den Umwinkeltrommeln (8-8.1-9) durch die Schnuren (4-23-27) und da zwei freie Winden (25-21) dazwischenliegen, verschiebt sich die Abschuss vorrichtung (12, 32, 33) zu einem Viertel ihrer Strecke. Beim Laden der Harpune mit der Achse (10.a) und den Umwinkeltrommeln (8.a-8.1.a-9.a) durch die Schnuren (4.a-23-27) und weil die zwei freien Winden (25-21) dazwischenliegen, verschiebt sich die Abschussvorrichtung (12, 32, 33) von einem Viertel zu zwei Viertel ihrer Strecke. Beim Laden der Harpune mit der Achse (10.b) und den Umwinkeltrommeln (8.b-8.1.b-9.b) durch die Schnuren (4.b-24-27) und weil zwei freie Winden (34-21) dazwischenliegen, verschiebt sich die Abschussvorrichtung(12, 32, 33) von zwei Viertel zu drei Viertel ihrer Strecke. Beim Laden der Harpune mit der Achse (10.c) und den Umwinkeltrom- meln (8.c-8.1.c-9.b) durch die Schnuren (4.c-24-27) und da zwei freie Winden (34-21) dazwischen- liegen, verschiebt sich die Abschussvorrichtung (12, 32, 33) von drei Viertel zu vier Viertel Ihrer Strecke. Beim Abschuss dreht die Abschussvorrichtung (12, 32, 33) durch die freien Winden, die als Differential fungieren und durch die Schnuren (27, 33, 24) die Umwinkeltrommeln (9-9.a-9.b-9.c) zusammen mit ihren Achsen (10-10.a-10.b-10.c) und ihren Umwinkeltrommeln (8-8.1), (8.a-8.1.a), (8.b-8.1.b) (8.c-8.1.c), die von den Schnuren (4), (4.a), (4.b), (4.c) umgewickelt werden und so den Pfeil (5) abschiessen. Die Umwinkeltrommeln (8.c-8.1.c-9.c) sind im Durchmesser nur so viel größer als die entsprechenden (8.b-8.1.b- 9.b) und diese als die (8.a-8.1.a-9.a) und diese als die (8-8.1-9), wie es gerade nötig ist, damit die Schnuren (4.c-24), (4.b-24) und (4.a-23) über und unter die Umwinkel-trommeln (8.b-8.1.b-9.b), (8.a-8.1.a-9.a) und (8-8.1-9) durchgehen können.

6. Handharpune mit Pfeilbewegungsachse, gemäß Ansprüche 1 bis 5. Die Umwinkeltrommeln (8-8.1-9, 8.a-8.1.a- 9.a, 8.b-8.1.b-9.b, 8.c-8.1.c-9.c) ändern ihren Durchmesser an den Punkten, wo sie peri-metrisch mit den Schnuren (4, 4.a, 4.b, 4.c, 11, 28, 23, 24) in Berührung kommen. Darüber hinaus ändern sie den Anwendungsradius der Berührungskräfte der Schnuren (4, 4.a, 4.b, 4.c, 11, 28, 23, 24) zu den Umwinkeltrommeln (8-8.1-9, 8.a-8.1.a-9.a, 8.b-8.1.b-9.b, 8.c-8.1.c-9.c) und den Um-winkeltrommeln (8-8.1-9, 8.a-8.1.a-9.a, 8.b-8.1.b-9.b, 8.c-8.1.c-9.c) zu den Schnuren (4, 4.a, 4.b, 4.c, 11, 28, 23, 24). Außerdem ändern sie ständig das Verhältnis der Bewegungsübertragung der Ab-schussanlage (12, 32, 33) zum Pfeil (5) beim Abschuss und der Schnuren (4, 4.a, 4.b, 4.c) zur Abschussanlage (12, 32, 33) beim Laden. Sie ändern auch ihre Kopulationsneigung beim Laden und Abschiessen. Sie ändern auch ständig ihre augenblicklichen Versetzungen und die Geschwindig-keiten der Abschussanlage (12, 23, 33) zum Pfeil (5) beim Abschiessen. Die Achsen (10, 10.a, 10.b, 10.c) mit ihren Umwinkeltrommeln (8-8.1-9, 8.a-8.1.a-9.a, 8.b-8.1.b-9.b, 8.c-8.1.c-9.c) und ihre Schnuren (4, 4.a, 4.b, 4.c, 11, 28, 23, 24) stellen ein System von Bewegungsübertragung mit ständig veränderten Verhältnissen dar.

7. Handharpune mit Pfeilbewegungsachse, gemäß Ansprüche von 1 bis 6, mit Umwinkeltrommeln (8-8.1-9, 8.a-8.1.a-9.a, 8.b-8.1.b-9.b, 8.c-8.1.c-9.c), die perimetrisch mit einem spiralförmigen Zug (einer Rinne) versehen ist, in dem die Schnuren (4, 4.a, 4.b, 4.c, 11, 28, 23, 24) eingenistet sind und mit denen sie verbunden sind. Die Richtung der Spirale der Umwinkeltrommeln (8, 8.a, 8.b, 8.c) ist umgekehrt von der der Umwinkeltrommeln (8.1, 8.1.a, 8.1.b, 8.1.c) und die Umwinkeltrommeln (8-8.1, 8.a-8.1.a, 8.b-8.1.b, 8.c-8.1.c) sind von den äußeren Hülle (6-6.1) eingeschlossen

8. Handharpune mit Pfeilbewegungsachse, gemäß Ansprüche 1 bis 5. Die Abschussanlage ist der Kolben (12), der sich beim Abschuss durch den Luftdruck der Luftkammer (A) bewegt.

9. Handharpune mit Pfeilbewegungsachse, gemäß Anspruch 8, mit der Luftkammer (B), die der Kolben (12) formt. Diese enthält eine kleine Menge Luft, die der Kolben (12) verwendet, damit er zum Stillstand kommt, wenn er sich dem Ende seiner Laufstrecke nähert. Die Luftkammer (B) steht beim Abschiessen unter Unterdruck, der fast -1Atm beträgt. Das liegt beim Abschiessen an dem Kolben selbst und auch noch daran, dass der Kolben (12) mit zwei Säumen (13) versehen ist, die perimetrisch und in entgegengesetzter Richtung angelegt sind, und dass sich der Kolben (12)beim Abschiessen in die entgegengesetzte Richtung innerhalb des Rohres (15) bewegt, als die des Pfeiles (5). Es liegt auch noch daran, dass der Kolben (12) vorne ovalförmig ist und dass der Pfeil (5) oberhalb des Rohres (3) liegt.

10. Handharpune mit Pfeilbewegungsachse, gemäß Ansprüche 1 bis 5. Dabei dient die Feder (32) als Abschussanlage. Die Rohre (39) und (15) sind ein und derselbe Gegenstand und werden wie ein einzelner Teil hergestellt.

11. Handharpune mit Pfeilbewegungsachse, gemäß Anspruch 1 bis 5 mit einer Abschussanlage aus Gummi (33).

## Revendications

1. Fusil à submersion (plongée en apnée) avec un axe de mouvement de harpon qui est constitué par une poignée (2) qui contient un trigger (1) et se reunit par un tuyau (3) qui contient un autre tuyau de plus petit diametre (15) ou se trouve la tête (7, 30, 29, 31) qui crée avec les tuyaux (3) et (15) qui reunissent les reservoirs d'air avec les calibres (16) un reservoir d'air uni (A) qui apporte au moins un axe (10, 10a, 10b, 10c) sur lequel sont colloques deux batteries de enroulement (8-8.1-8a-8.1.a -8b-8,1.b-8c-81.c) à l'extremité longue aussi une batterie d'enroulement (9,9.a 9b,9c) au centre ou girent l'axe (10,10a,10 b,10c) et les batteries d'enroulement (8-8.1-9,8.a-8.1a-9.a,8.b-8.1.b-9.b,8.c-8.1.c-9) comme un corps uni et le centre de l'axe (10,10a,10b,10c) avec la batterie d'enroulement (9,9a,9b,9c) sont situes à l'interieur de la tête (7,30,29,31) et aussi dans le reservoir d'air (A) tandis que les extremites de l'axe (10,10a,10b,10c) et les deux batteries (8,8.1,8a,8,1a,8b-8.1b-8c,8.1c) sont situees dehors la tête et la tête (7,30,29,31) et le reservoir (A) du moment ou l'axe (10,10a,10b,10c) contient deux(2) roulements (17) entre la batterie (9,9a,9b,9c) et (8-8.1.8a,81a,8b-81b,8c,81c)les quels s'introduisent dans la tête (17,30,29,31) et par ou l'axe (10,10a,10b,10c) apporte entre les roulements (17) et les batteries d'enroulement (8-8.1,8.a,8.1a,8.b,8.1b,8.c-81c) deux seals (18) qui soutient l'air sous pression du reservoir (A) et s 'introduisent incorporees dans la tête (7,30,29,31) et l'axe (10-10a,10b,10c) apporte entre roulements (17) et les batteries (8-8.1-8.a-8.1.a,8.b-8.1.b,8.c-8.1c) deux seals (18) qui soutient l'air sous pression du reservoir (A) et entrent incorpores dans la tête (7,30,29,31) et par ou les batteries d'enroulement (8.8.1, 81a,8b-81b,8c-81c) sont collegues par une corde (4,4a,4b,4c) par la quelle on lance l'harpon (5) et le sisteme de lancement (12,32,33) est collegue à la corde (11.28,27) et par cette corde (11,28,23,24) en tirant le sisteme de lancement (12,32,33) en armant le fusil par le sisteme de lancement (12,32,33)pendant le lancement de fusil se deroule aussi la corde(11,28,23,24) en tirant le sisteme de lancement (12,32,33) du fusil qui developpe la corde (11,28,23,24) par la batterie d'enroulement (9,9.a,9.b,9.c) et si on donne de la force à la corde pour armer le fusil, la corde (4,4.a,4.b,4.c) se libere de la batterie (8-8.1,8.a-8.1a,8.b-8.1.b,8.c-8.1.c) en girant avec l'axe (10,10.a,10.b,10.c) et la batterie (8-8.1,8.a-8.1.a,8.b-8.1.b ou8.c-8.1.c) qui s'enroule avec la corde(4,4.a,4.b,4.c) qui deplace et lance l'harpon (5) du fusil.

2. Fusil à submersion avec un axe de mouvement de harpon comme la description 1 apporte un axe (10) dans lequel il y a deux batteries d'enroulement (8-8.1) à l'extremité du quel il y a une autre batterie (9) situé au centre et par le quel l'axe(10) et le batterie (8 -8.1-9) girent comme un corps uni ,la partie central de l'axe avec la batterie(9) se trouvent dedans la tête (7) et dans le reservoir d'air (A) tandis que les extremites de l'axe (10) et les deux batteries (8-8.1) se trouvent dehors la tête (7), le reservoir d'air et l'axe (10) passe à travers les calibres de la tête (7) et aussi l'axe (10) present deux roulements (17)entre la batterie (9) et (8-8.1) qui entrent incorpores dans la tête (7) .L'axe(10) apporte entre le roulement (17) et les batteries (8-8.1)aussi des seals (18) qui soutient l'air sous pression du reservoir(A) et qui entrent incorpores dans la tête (7) tandis que les batteries d'enroulement (8-8.1) sont unies avec la corde(4)avec la quel celui qui utilise le fusil l'arme et selon le sisteme de lancement (12,32,33) est uni à la corde(11) la quelle est unie avec la batterie(9) de l'axe(10) et aussi quand on donne de la force à la corde(4) pour armer, la corde (4) se libere de batterie (8-8.1) en girant avec l'axe(10) et la batterie (9) la quelle s'enveloppe avec la corde (11) en tirant le sisteme de lancement (12,32,33) en armant le fusil et aussi le sisteme de lancement 912,32,33) pendant le lancement du fusil tire et developpe la corde (11) de la batterie (9) qui gire avec l'axe (10) et les batteries (8-8.1) qui s'enveloppent avec la corde (4)de cette maniere la corde deplace et lance l'harpon(5) du fusil.

3. Fusil à plongée en apnée avec un axe de mouvement harpon ,comme la description 1 contient deux axes (10-10.a) à les extremites deux batteries d'enroulement (8-8.1) sur l'axe (10) que (8.a-8.1a) sur l'axe(10.a) .Au centre ilya une batterie(9) l'un sur l'axe (10) et l'autre (9.a) sur l'axe(10.a)Chaque axe avec le batterie gire comme un corps uni et aussi la partie central des axes (10-10.a) avec le batterie (9-9.a) . Tout ca est situe'dans la tête (30) et dans le reservoir d'air (A) tandis que les extremites des axes (10-10.a) et les batteries (8-8.1-8.a-8.1.a)sont situees dehors la tête (30) et le reservoir (A) parce que les axes(10-10.a) passent à travers les calibres de la tête (30) et aussi les axes (10-10.a)apportent deux roulements (17) entre la batterie (9) et la (8-8.1) pour l'axe (10) et entre la batterie (9.a) et les (8.a-8.1.a) pour l'axe (10.a) ,les quels sont incorpores dans la tête (30) ,les axes(10-10.a)apportent entre les roulements(17) et les batteries(8-8.1) pour l'axe (10) et (8.a-8.1.a),por l'axe (10.a) entrent incorporees dans la tête (30) et aussi les axes (10-10.a) apportent entre les roulements (17) et les batteries(8-8.1) pour l'axe (10) et (8.a-8.1.a) pour l'axe (10.a) deux seals(18) pour soutenir l'air sous pression du reservoir (A) et entrent incorporees dans la tête (30) et aussi les batteries (8-8.1) et(8.a-8.1a) est unis avec les cordes (4) et (4.a) avec les quelles celui qui utilise le fusil, l'arme .En autre le sisteme de lancement (12,32,33) est lié à la base (22) qui apporte la poulie libre(21) et puisque la batterie (9) de l'axe (10) est collegue à la corde (28) qui à sa fois à la batterie (9.a) de l'axe (10.a) et aussi au sisteme de lancement (12,32,33) grâce à la poulie libre (21) et à cause que pendant 'armament du fusil avec l'axe (10) et les batteries (8-8.1-9) à travers les cordes (4-28) et la poulie libre (21) le lance (12,32,33) se deplace dans le es pace de 1 second du parcours.Apres qu'on a armé le fusil avec l'axe (10.a) et les batteries (8.a-8.1.a-9.a) à travers les cordes (4.a-28) à cause de l'introduction de la pulie libre (21) le sisteme de lancement(12,32,33) se deplace d'1 second à 2 seconds du parcours. Et pendant le lancement, le sisteme (12,32,33) à travers la poulie libre (21) qui fonctionne differentiel de la corde (28) gire les batteries (9-9.a) avec les axes (10-10.a) et les batteries (8-8.1), (8.a-8.1.a) s'enveloppent avec les cordes (4) et (4.a) pour deplacer et lancer l'harpon (5) du fusil et puisque les batteries (8.a-8.1.a-9.a) sont plus grandes en diametre que les autres (8-8.1-9) pour donner la possibilité aux cordes (4.a) et( 28 )de passer sur et sous les batteries (8-8.1) et (9) en correspondence.

4. Fusil à submersion avec un axe de mouvement de harpon selon la description 1 ,ce fusil presente 3 axes (10-10.a-10.b)sur les quels sont places à l'extremité deux batteries d'enroulement (8-8.1) sur l'axe (10) et (8.a-8.1.a) sur le correspondent axe (10.a) et les dernieres (8.b-8.1b.) sur l'axe (10.b).Tous apportent au centre une batterie (9) sur l'axe (10), la (9.a) sur l'axe (10.a) et (9.b) sur l'axe (10.b).Chaque axe avec les batteries gire ensemble et de la partie centrale des axes (10-10.a-10.b) avec les batteries d'enroulement (9-9.a-9.b) se trouve à l'interieur de la tête (29) et dans le reservoir (A) tandis que les extremites des axes (10-10.a-10.b) avec les batteries (8-8.1-8.a-8.1.a-8.b-8.1.b) sont places dehors la tête (29) et le reservoir (A) les extremites des axes (10-10.a-10.b) passent à travers les calibres de la tête (29) et aussi les axes (10-10.a-10.b) apportent des roulements (17) entre la batterie (9) et les autres (8-8.1) pour l'axe (10) et entre la batterie (9.a) et les autres (8.a-8.1.a) pour l'axe (10.a) et entre la batterie (9.b) et les autres (8.b-8.1.b) pour l'axe (10.b) qui entrent incorporees dans la tête (29). Aussi les axes (10-10.a-10.b) presentent entre les roulement (17) et les batteries (8-8.1) pour l'axe (10),(8.a-8.1.a) pour l'axe (10.a) et (8.b-8.1.b) pour l'axe (10.b) des seals (18) qui soutiennent l'air sous pression du reservoir (A) et entrent incorporees dans la tête (29) et aussi les batteries (8-8.1) ,(8.a-8.1.a) et (8.b-8.1.b) sont liées avec les cordes (4), (4.a) et (4.b) ou avec ca le fusil est armée et aussi le sisteme de lancement (12,32,33) est lié avec la base (22) qui apporte la poulie libre (21) la quel à sa fois est liée à la corde (27) qui present aux extremites deux poulies libres (25),(34) à travers leurs bases (26),(35) et aussi la batterie (9) de l'axe (10) est lié avec la corde (23) la quelle à sa fois est unie à la batterie (9.a) de l'axe (10.a) et aussi à la poulie libre (25) de la corde (27) .En autre la batterie (9.b) de l'axe (10.b) est liée a la corde (24) dont l'autre extremité est liée a une base fixe de la tête (29) tandis que est liée aussi avec la poulie libre (34) de la corde (27) et quand on arme le fusil ave l'axe (10) et les batteries(8-8.1-9) à travers les cordes (4-23-27) et à cause de deux poulies libres (25-21), le sisteme de lancement (12,32,33) se deplace à ¼ du parcours et pendant l'armemant de fusil avec l'axe (10.a) et les batteries (8.a-8.1.a-9.a) à travers les cordes (4.a-23-27) et à cause des deux poulies libres (25-21) ,le sisteme de lancement (12,32,33) se deplace du ¼ à 2/4 du parcours.Aussi quand on arme le fusil et avec l'axe (10.b) et des batteries (8.b-8.1.b-9.b) à travers les cordes (4.b-24-27) et puisque on trouve deux poulies libres (34-21), le sisteme de lancement (12,32,33) se deplace des 2/4 à ¾ du parcours et aussi pendant le lancement le sisteme (12,32,33) grace aux poulies libres (21-25-34) qui fonctionnent comme differentiel soit des cordes (27,23,24) girent les batteries (9-9.a-9.b) avec les axes (10-10.a-10.b) et les autres batteries (8-8.1) ,(8.a-8.1.a), (8.b-8.1.b) qui s'enveloppent avec les cordes (4), (4.a), (4.b) avec les quelles deplacent et lancent l'harpon (5) du fusil parceque les batteries (8.b-8.1.b-9.b) sont plus grandes en diametre que les correspondantes(8.a-8.1.a-9.a) et aussi que les (8-8.1-9) afin des passer les cordes (4.b-24)et (4.a-23) sur et sous les batteries (8.a-8.1.a-9.a) et (8-8.1-9).

5. Fusil à submersion avec un axe de mouvement du harpon ,selon la description 1, cette fois avec 4 axes ,c'est à dire (10-10.a-10.b-10.c) sur les quels on place 2 batteries d'enroulement (8-8.1) sur l'axe (10) ,les (8.a-8.1a) sur l'axe (10.a) ,les (8.b-8.1.b) sur l'axe (10.b) et les (8.c-8.1c) sur l'axe (10.c) au centre une batterie (9) sur l'axe (10) ,le (9.a) sur l'axe (10.a) ,le (9.b) sur l'axe (10.b) et (9.c) sur l'axe (10.c) .Chaque axe avec les batteries gire et de la partie centrale des axes (10-10.a-10.b-10.c) avec les batteries (9-9.a-9.b-9.c) au dedans de la tête (31) et du reservoir d'air (A) tandis que les extremites des axes (10-10.a-10.b-10.c) et les batteries (8-8.1-8.a- 8.1.a-8.b-8.1b-8.c-8.1.c)se trouvent dehors la tête (31) et aussi le reservoir (A) puisque les axes (10-10.Aa-10.b-10.c)passent à travers les calibres de la tête(31) et les axes (10-10.a-10.b-10.c)presentent 2 roulements (17) entre la batterie (9.a) et (8-8.1) et pour l'axe (10) et entre la batterie (9.a) et les (8.a-8.1a) pour l'axe (10.a) et entre la batterie (9.b) et les (8.b-8.1.b) pour l'axe (10.b) et le même se passe pour l'axe (10.c).Les batteries sont incorporees dans la tête (31) ,les axes (10-10.a-10.b-10.c) presentent entre les roulements (17),les batteries(8-8.1) pour l'axe (10), (8.a-8.1.a) pour l'axe (10.a), (8.b-8.1.b) por l'axe (10.b), (8.c-8.1.c) pour l'axe (10.c) ilya deux seals (18) qui soutiennent l'air sous pression du reservoir (A) et aussi entrent incorpores dans la tête(31) et aussi les batteries (8-8.1), (8.a-8.1.a),(8.b-8.1.b)et (8.c-8.1.c) les batteries sont liées aux cordes (4),(4.a),(4.b)et (4.c) avec les quelles quand on arme le fusil selon le sisteme de lancement(12,32,33) est lié avec la base (22) ou se trouve la poulie libre (21) qui est liée à la corde (27) qui present aux extremites 2 poulies libres ,(25), (34) à travers leurs bases (26),(35) tandis que la batterie (9) de l'axe (10) est liée à la corde (23) qui est lié à la batterie (9.a) de l'axe(10.a) et aussi avec la poulie libre (25) de la corde (27).La batterie (9.b) de l'axe (10.b) est liée avec la corde (24) qui est unie à la batterie (9.c) de l'axe (10.c) et aussi à la poulie libre (34) de la corde (27) . Quand on arme le fusil avec l'axe (10) et les batteries (8-8.1-9) à travers les cordes (4-23-27) et cause des deux poulies libres (25-21) le sisteme de lancement (12,32,33) se deplace ¼ du parcours et au moment de armemant et avec l'axe (10.a) et les batteries d'enroulement (8.a-8.1a-9.a) à travers les cordes (4.a-23-27) et à cause de l'introduction de deux poulies libres (25-21) le sisteme de lancement (12,32,33) se deplace de 2/4 à ¾ du parcours et parceque pendant l'armemant de l'harpon et avec l'axe (10.c) et avec les batteries d'enroulement 98.c-8.1c-9.c) à travers les cordes (4.c-24-27) et à cause de l'introduition des deux poulies libres (34-21) le sisteme de lancement (12,32,33) se deplace de 2/4 à 4/4 du parcours pendant le lancement ,le sisteme (12,32,33) à travers les poulies libres (21,25,34) qui fonctionnent comme variables des cordes (27,23,24) girent autour des batteries (9-9.a-9.b-9.c) avec les axes (10-10.a-10.b-10c) et les batteries d'enroulement (8-8.1), (8.a-8.1.a) ,(8.b-8.1.b), (8c-8.1.c) qui s'enveloppent autour des cordes (4)(4.a),(4.b) ,(4.c) et de cette maniere lancent l'harpon (5) du fusil grâce au diameter des batteries (8.c-8.1c-9.c)qui est plus grand que les batteries(8.b-8.1b-9.b) et des (8.a-8.1a-9.a) et des (8-8.1-9) afin que les cordes94.c-24),(4.b-24) et (4.a-23) peuvent passer sous et sur les batteries d'enroulement (8.b-8.1b-9.b) ,(8.a-8.1a-9.a) et 98-8.1-9).

6. Fusil à submersion avec axe d'harpon comme on dit de 1 jusqu à 5 c'est à dire que les batteries (8 - 8.1 - 9,8.a-8.1a - 9.a, 8.b -8.1b-9.b-8.c-8.1c-9.c) changent le diameter au point où sont unies aux cordes (4,4.a-4.b,4.c, 11,28,23,24) et aussi changent le rayon d'application des forces des cordes vers les batteries (8-8.1-9-8.a-8.1a-9.a-8.b-8.1b,9.b-8.c-8.1c-9.c) et des autres batteries(8-8.1-9,8.a-8.1.a-9.a,8.b-8.1.b-9.b,8.c-8.1c-9.c) vers les cordes (4,4.a-4.b-4.c.11,28,23,24) en changeant relation de transmission de mouvement du sisteme (12,32,33) vers l'harpon (5) pendant le lancement aussi des cordes (4,4.a-4.b,4.c) en changeant l'inclination de couronement pendant l'armement et le lancement du fusil (5)et aussi les vitesses du sisteme (12,32,33) vers l'harpon l'inclination de couronement pendant l'armement et le lancement du fus (5).Aussi les axes (10.10.a,10.b,10.c) avec les batteries(8-8.1-9,8.a-8.1a-9.a,8.b-8.1b-9.b,8.c-8.1c-9.c) et les cordes(4,4.a,4.b,4.c,11,28,23,24) constituent un sisteme de mouvement qui change en continuation.

7. Fusil à submersion ,comme de 1-6 dans le quel les batteries (8-8.1-9,8.a-8.1.a-9.a,8.b-8.1.b-9.b,8.c-8.1c-9.c)apporte un canal à spiral dans le quel se trouvent les cordes (4,4.a,4.b,4.c,11,28,23,24)qui sont unies aux batteries .Les sens de la spirale des batteries (8,8.a,8.b,-8.c) est invers aux autres (8-8.1,8.a-8.1,a,8.b-8.1.b,8.c-8.1c)et aussi les premieres sont entourees par de couvertures exterieures (6-6.1)

8. Fusil à submersion avec un axe mouvement harpon comme de 1-5 avec le quel le sisteme de lancement par un piston (12) le quel pendant le lancement bouge avec la pression de l'air du reservoir (A)

9. Fusil avec un axe de mouvement d'harpon comme description (8) qui est composé d'un reservoir (B) qui est cree par le piston (12) et qui contient une petite quantité d'air que le piston (12) utilise pour s'arreter quand pendant le lancement tend à arriver au terme du parcours et aussi le reservoir (B) pendant l'armement du fusil ,se trouve sous pression qui tend à -1Atm qui est due au piston (12) et aussi le même piston (12) presente deux seals (13) qui sont places apposees et le piston (12) bouge au dedans du tuyau (15) avec direction contraire à celle de l'harpon (5) .Le piston (12) a une forme oval et le harpon est placé sur le tuyau (3) .

10. Fusil avec axe mouvement de l'harpon comme de 1-5 dans le quel le sisteme de lancement est l'elastique (32) et les tuyaux (3) et (15) constituent un corps unis et sont fabriques comme un corps unis .

11. Fusil avec de mouvement harpon ,comme 1-5 ,du quel la caratteristique est que le sisteme de lancement est l'elastique(33).
